(19) Europäisches Patentamt
European Patent Office
Office européen des brevets

(11) **EP 3 128 073 A1**

(12) **EUROPÄISCHE PATENTANMELDUNG**

(43) Veröffentlichungstag:
08.02.2017 Patentblatt 2017/06

(21) Anmeldenummer: **15180093.5**

(22) Anmeldetag: **06.08.2015**

(51) Int Cl.:
*D21C 5/02* (2006.01)     *D21C 9/08* (2006.01)
*D21H 21/02* (2006.01)     *D21H 17/68* (2006.01)
*D21H 19/40* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Clariant International Ltd**
**4132 Muttenz (CH)**

(72) Erfinder:
• **ZORJANOVIC, Jovica**
  **85368 Moosburg (DE)**
• **HOELZL, Gabriele**
  **85405 Nandlstadt (DE)**
• **SCHERBAUM, Katja**
  **85354 Freising (DE)**
• **SOHLING, Ulrich, Dr.**
  **85356 Freising (DE)**
• **RUF, Dr., Friedrich**
  **84184 Tiefenbach (DE)**

(74) Vertreter: **Silber, Anton**
  **Clariant Produkte (Deutschland) GmbH**
  **Patent & License Management**
  **Lenbachplatz 6**
  **80333 München (DE)**

(54) **KOMPOSITMATERIAL FÜR DIE STÖRSTOFFBEKÄMPFUNG BEI DER PAPIERHERSTELLUNG**

(57)     Die Erfindung betrifft ein Kompositmaterial, umfassend ein Schichtsilikat, welches mit zumindest einem Tensid mit zumindest einer hydrophilen Kopfgruppe und zumindest einem hydrophoben Rest modifiziert ist, ein Verfahren zu dessen Herstellung sowie ein Verfahren zur Entfernung von Störstoffen in der Papierherstellung.

Figur 3

**Beschreibung**

Die Erfindung betrifft ein Kompositmaterial, ein Verfahren zur Herstellung des Kompositmaterials, sowie ein Verfahren zur Störstoffbindung bei der Papierherstellung.

Die wichtigsten Rohstoffquellen für die Papierherstellung sind Zellstoff und Holzstoff als sogenannte Primärfaser und Altpapier als sogenannte Sekundärfaser.

Laut eines Berichts des Verbands der Papierfabriken e.V. lag der Anteil des Altpapiers bei der Herstellung von Papier und Pappe im Jahr 2010 in Deutschland bei etwa 70 %. Weltweit liegt der Anteil des Altpapiers als Rohstoff bei der Papier- und Pappeerzeugung bei ca. 60 %. Die Bedeutung der Verwendung von Altpapier zur Papiererzeugung nimmt daher aus wirtschaftlichen und umweltrelevanten Gründen immer mehr zu. Wegen der komplexen Zusammensetzung des Altpapiers fallen bei der Aufarbeitung des Altpapiers neben den Fasern viele Komponenten an, die in der Zellstoffsuspension gelöst sind bzw. als kolloidale Partikel vorliegen. Diese Störstoffe können bei der Papiererzeugung zu Schwierigkeiten führen, da sie sich einerseits in den Papiermaschinen ablagern und andererseits die Eigenschaften des Papiers bzw. sein Aussehen negativ beeinflussen können. Um den durch die Störstoffe verursachten Schwierigkeiten begegnen zu können besteht die Möglichkeit, die Störstoffe bei der Aufarbeitung des Altpapiers zu entfernen. Dabei fallen jedoch Abfälle an, welche entsorgt werden müssen. Bei der Aufarbeitung wird auch Wasser von der Fasersuspension abgetrennt, das nach Abtrennen der Störstoffe wieder in den Prozess der Papierverarbeitung zurückgeführt werden muss. Schließlich besteht auch noch die Schwierigkeit, dass für die Entfernung der Störstoffe entsprechende Chemikalien bzw. Vorrichtungen erforderlich sind, welche den Prozess verkomplizieren und Kosten verursachen.

Als alternative Maßnahme versucht man, die Störstoffe zu binden und so zu kaschieren, dass sie in dem aus dem Altpapier erzeugten Papier verbleiben können, ohne dort eine störende Wirkung zu entfalten. Diese Vorgehensweise hat den Vorteil, dass die Störstoffe nicht aus der Fasersuspension entfernt werden müssen.

Problematisch ist dabei jedoch, dass das bei der Papierherstellung eingesetzte Wasser im Kreislauf gefahren wird. Gelingt es daher nicht, die Störstoffe vollständig an ein geeignetes Adsorbens zu binden, welches dann eine Integration in das Papier ermöglicht, reichern sich nach und nach im Kreislaufwasser Störstoffe an. Diese Störstoffe können dann zu Produktstörungen führen, wie zum Beispiel zur Ausbildung von Ablagerungen auf Walzen der Papiermaschine, zu Verklebungen von Sieben, wie sie beim Ausgießen der Faserstoffsuspension verwendet werden, etc. Letztendlich können diese Effekte dazu führen, dass die Papierproduktion angehalten werden muss, um Ablagerungen, die sich in der Papiermaschine bzw. auf den Sieben angesammelt haben, entfernen zu können.

Um die Anzahl der Produktionsstopps zu minimieren, ist es wünschenswert die sich im Kreislaufwasser ansammelnden Störstoffe möglichst vollständig zu binden indem man beispielsweise Polymere oder Adsorbentien bereits im Stoffauflauf einsetzt.

Die meisten Störstoffe tragen eine negative Ladung. Typische Störstoffe sind beispielsweise Huminsäuren, Baumharzkolloide, Ligninderivate, Ligninsulfonate, die aus den Fasern in den Papierkreislauf eingetragen werden. Hinzu kommen anionische Störstoffe, die in die Papiermaschine durch ein Recycling von Papierbruch eingetragen werden. Dieser Papierbruch wird typischerweise wieder dispergiert und in die Papiermaschine eingebracht. Die im Papierbruch enthaltenen Inhaltsstoffe und Hilfsmittel werden daher komplett in den Kreislauf zurückgeführt. Dadurch werden zusätzlich zum Beispiel Carboxymethylcellulosen, Polyacrylate, Polyphosphonate und Silikate in das Kreislaufwasser eingetragen. Als weitere, anionisch geladene Störstoffe, sammeln sich im Kreislaufwasser Latices an, die im Papierstrich verwendet werden. Diese Latices sind zwar typischerweise hydrophob. Sie tragen jedoch auch anionische Ladungen. Latices neigen daher stark zur Agglomeration, wobei sich die Latices als klebrige weiße Rückstände, als sogenannter "white pitch" auf Teilen der Papiermaschine ablagern.

Im Stand der Technik ist der Austrag von klebrigen Stoffen (sogenannten "Stickies") durch den Einsatz von Talkum (Talk) beschrieben. So ist gemäß P. Biza, E. Gaksch und P. Kaiser "Verbesserter Austrag von Stickies durch den Einsatz von Talkum", Wochenblatt für Papierfabrikation 11/12 (2002) S. 759ff, spätestens seit Beginn des letzten Jahrhunderts die Wirkung von Talkum zur Reduktion klebender Ablagerungen dokumentiert. Fast alle bekannten natürlichen und synthetischen klebenden Substanzen sind hydrophob. Talkum ist zur Bindung dieser Stickies bestens geeignet, weil es eine von Natur aus hydrophobe Oberfläche aufweist, wodurch es leicht an Kleberoberflächen adsorbiert und diese durch Umhüllung weniger klebrig werden lässt.

Weiterhin ist beispielsweise in der US 5,368,692 die Verwendung von Montmorilloniten, wie Bentonit, zur Kontrolle von Störstoffen in der Papiermasse beschrieben. Auch eine Alkalibehandlung von Bentoniten zu deren Aktivierung ist als eine Möglichkeit angesprochen.

In der US 4,964,955 ist ebenfalls ein Verfahren zur Verringerung der Störstoffmenge bei der Papierherstellung beschrieben. Zur Störstoffbindung wird eine teilchenförmige Zusammensetzung verwendet, welche (a) ein wasserlösliches kationisches Polymer enthält, welches auf (b) ein im Wesentlichen wasserunlösliches teilchenförmiges Substrat aufgebracht ist. Das Polymer soll ausreichend elektropositiv sein, so dass die teilchenförmige Zusammensetzung ein Zeta-Potential von mindestens etwa +30 mV aufweist. Bei dem Polymer handelt es sich vorzugsweise um ein Poly(dialkyldiallylammoniumhalogenid). Als Substrat wird beispielsweise ein Phyllosilikatmineral eingesetzt.

In ähnlicher Weise beschreibt die EP 0 760 406 A2 eine Kombination eines Poly(dadmac/acrylamid) und eines Bentonits bei der Störstoffbindung.

In der GB 2 297 334 A wird die Verwendung eines smektitischen Tons zur Störstoffkontrolle beschrieben, wobei der smektitische Ton in bestimmter Weise modifiziert ist. Der smektitische Ton enthält monovalente austauschbare Kationen in einem äquivalenten Ionenanteil im Bereich von 0,20 bis 0,60. Eine erste Art von bivalenten austauschbaren Kationen ist in einem äquivalenten Ionenanteil im Bereich von 0,40 bis 0,80 im Ton enthalten. Schließlich ist noch eine zweite Art von bivalenten austauschbaren Kationen in einem äquivalenten Ionenanteil im Bereich von 0,00 bis 0,20 im Ton enthalten, wobei die erste Art von bivalenten austauschbaren Kationen Calcium umfasst und die zweite Art von bivalenten austauschbaren Kationen Magnesium umfasst.

In der WO 2006/063682A2 wird die Verwendung bestimmter Bentonite zur Störstoffbindung beschrieben. Durch Auswahl eines Bentonits mit einem sehr hohen Anteil an austauschbaren einwertigen Kationen und einer sehr hohen Kationenaustauschkapazität kann mit sehr einfachen und damit kostengünstigen Mitteln eine effiziente Störstoffbindung erreicht werden.

Viele der im Stand der Technik eingesetzten Mittel zur Störstoffbindung sind entweder recht kostspielig oder meist auch nicht gegenüber allen Störstoffen gleich wirksam. Es besteht somit ein ständiger Bedarf an Mitteln zur Bindung von Störstoffen in der Papierherstellung.

Eine Aufgabe der Erfindung war es daher, ein Adsorbens zur Verfügung zu stellen, welches beispielsweise bei der Papierherstellung eine sehr hohe und universelle Bindungskapazität für Störstoffe, wie sie bei der Papierherstellung auftreten, aufweist.

Insbesondere sollte das Adsorbens die Eigenschaft aufweisen, auch hydrophobe Anteile der Störstoffe effizient binden zu können.

Erfindungsgemäß wird diese Aufgabe durch ein Kompositmaterial mit den Merkmalen des Patentanspruchs 1 gelöst. Vorteilhafte Ausführungsformen des Kompositmaterials sind Gegenstand der abhängigen Ansprüche.

Dazu wird ein Kompositmaterial bereitgestellt, welches ein Schichtsilikat umfasst, das mit zumindest einem Tensid modifiziert ist.

Gemäß einer Ausführungsform wird ein Kompositmaterial bereitgestellt, welches aus einem Schichtsilikat besteht, welches mit zumindest einem Tensid modifiziert ist. Gemäß einer weiteren Ausführungsform wird ein Kompositmaterial bereitgestellt, welches aus einem Schichtsilikat und einem Tensid besteht.

Schichtsilikate weisen eine Schichtstruktur auf, wobei die Verbindung zwischen benachbarten Schichten deutlich geringer ausgeprägt ist, als die Bindungen, welcher innerhalb einer Schicht ausgebildet sind.

Dadurch können Schichtsilikate delaminieren, d.h. bei Kontakt mit einem Lösungsmittel, beispielsweise Wasser, können Schichtsilikate quellen, indem Wassermoleküle zwischen den einzelnen Schichten eingelagert werden, sodass sich der Schichtabstand zwischen einzelnen Schichten innerhalb eines Schichtsilikats vergrößert. Dies kann so weit gehen, dass das Schichtsilikat delaminiert wird, d.h. die Verbindung zwischen einzelnen Schichten verloren geht. Es entsteht eine Vielzahl kleiner Partikel, die aus Einzellamellen oder Paketen aus wenigen Lamellen des Schichtsilikats aufgebaut sind, beispielsweise 2 bis 30 Lamellen. Dadurch kann eine sehr große Oberfläche zur Verfügung gestellt werden, durch welche Störstoffe, insbesondere klebende Störstoffe (Stickies) gebunden werden können. Die bei der Delaminierung entstehenden Lamellen, bzw. Lamellenpakete zeigen eine anisotrope Ladungsdichte. Während die Flächen der Lamellen weitgehend unpolar sind und daher eine eher hydrophobe Natur aufweisen, befinden sich an den Kanten der Lamellen geladene Gruppe sowie reaktionsfähige Hydroxygruppen. Die Kanten der Lamellen weisen daher eine eher hydrophile Natur auf. Die Erfinder nehmen an, dass die Tenside an den Kanten der Lamellen anlagern können und dadurch auch die Kanten einen unpolaren Charakter erhalten, da die hydrophoben Reste der Tenside die Eigenschaften der Kante der Lamelle bestimmen.

Wie durch Experimente gezeigt werden konnte, kann durch Verwendung des erfindungsgemäßen Kompositmaterials eine effiziente Maskierung von Störstoffen erreicht werden, sodass diese in die Papierbahn integriert werden können, ohne dass ein Qualitätsverlust beim Papier in Kauf genommen werden muss. Ferner lässt sich durch Verwendung der erfindungsgemäßen Kompositmaterialien die Ausbildung von Ablagerungen in einer Papiermaschine deutlich verringern. Auf diese Weise ist es möglich, auch bei steigenden Anteilen an Altpapier Papierbahnen mit hoher Qualität zu erzeugen und den Anteil an Störstoffen, die vor der Weiterverarbeitung vom Altpapier abgetrennt werden müssen bzw. im Kreislaufwasser verbleiben und sich dort ansammeln, gering zu halten.

Das erfindungsgemäße Kompositmaterial umfasst als wesentliche Komponente zunächst ein Schichtsilikat. Als Schichtsilikate werden bevorzugt Alumosilikate verwendet, welche eine ausgeprägte Schichtstruktur aufweisen und welche, ggf. nach einer vorhergehenden Aktivierung, in einem Lösungsmittel, bevorzugt Wasser, leicht delaminieren. Geeignete Schichtsilikate sind beispielsweise aus der Familie der Tonmineralen, Glimmer sowie Palygorskite und Sepiolith. Besonders bevorzugt wird als Schichtsilikat ein Bentonit bzw. Montmorillonit eingesetzt.

Als weitere wesentliche Komponente enthält das Kompositmaterial ein Tensid. Als Tensid können an sich alle Tenside eingesetzt werden, welche eine polare, hydrophile Gruppe aufweisen, welche mit einer unpolaren, hydrophoben Gruppe verbunden ist, also einen amphiphilen Charakter aufweisen. Tenside bilden in Wasser Micellen, wobei sich die Tensidmoleküle so ausrichten, dass sich die hydrophoben Enden im Inneren der Micellen sammeln und die hydrophilen Gruppen sich in Richtung des umgebenden Wassers orientieren.

Als Tenside können an sich sowohl nichtionische als auch ionische Tenside eingesetzt werden, wobei ionische Tenside bevorzugt sind.

Als nichtionische Tenside können beispielsweise Verbindungen eingesetzt werden, welche mehrfache Alkohole, beispielsweise Zucker, als hydrophile Gruppe enthalten, welche mit einem hydrophoben Rest, beispielsweise einer langkettigen Alkylkette verbunden ist.

Als Tenside können auch ionische Tenside eingesetzt werden, wie anionische Tenside, kationische Tenside oder auch amphotere Tenside.

Als anionische Tenside, die also zumindest eine anionische Ladung an der hydrophilen Gruppe tragen, können beispielsweise Tenside eingesetzt werden, welche als anionische hydrophile Gruppe eine Carboxylatgruppe, eine Sulfonatgruppe, eine Sulfatgruppe, eine Phosphatgruppe oder auch eine Phosphonatgruppe aufweisen. Als hydrophobe Gruppe können diese Tenside eine langkettige Alkylgruppe aufweisen.

Als kationische Tenside, die also zumindest eine kationische Ladung an der hydrophilen Gruppe tragen, können beispielsweise quartäre Ammoniumverbindungen eingesetzt werden, wobei am geladenen Stickstoffatom gemäß einer Ausführungsform drei kurzkettige Alkylgruppen, wie Methyl- oder Ethylgruppen, sowie als hydrophobe Gruppe eine langkettige Alkylgruppe angeordnet sein können. Geeignete unpolare bzw. hydrophobe Gruppen werden weiter unten beschrieben.

Schließlich ist es auch möglich, amphotere Tenside einzusetzen, welche als polare hydrophile Gruppe sowohl eine anionische als auch eine kationische Gruppe aufweisen. Geeignet sind beispielsweise Carboxylatgruppen als anionische Gruppen und quartäre Ammoniumgruppen als kationische Gruppen. Die amphoteren Tenside weisen als hydrophoben Rest beispielsweise einen langkettigen Alkylrest auf.

Allgemein weisen die im erfindungsgemäßen Kompositmaterial enthaltenen Tenside eine hydrophile Gruppe auf, welche durch eine polare Gruppe oder eine anionische bzw. kationische Gruppe gebildet ist, sowie einen ungeladenen organischen Rest, welcher die hydrophobe Gruppe des Tensids bildet.

Die hydrophobe Gruppe wird gemäß einer Ausführungsform von einer Kohlenstoffkette gebildet, welche gemäß einer weiteren Ausführungsform zwischen 4 und 20 Kohlenstoffatome umfasst und welche geradkettig oder verzweigt sein kann. In der Kohlenstoffkette bzw. in seitenständig zur Kohlenstoffhauptkette angeordneten kurzkettigen Alkylgruppen, welche gemäß einer Ausführungsform 1 bis 5 Kohlenstoffatome umfassen können, können Heteroatome enthalten sein, wie beispielsweise Sauerstoffatome. Gemäß einer bevorzugten Ausführungsform umfasst die hydrophobe Gruppe nur Kohlenstoffatome. Die freien Valenzen der Kohlenstoff- bzw. Heteroatome sind jeweils durch Wasserstoffatome abgesättigt. Die Kohlenstoffkette kann ungesättigte Bindungen oder auch aromatische Systeme enthalten, wobei die aromatischen Systeme, beispielsweise Phenylgruppen, sowohl in der Kette als auch seitenständig zur Hauptkette angeordnet sein können. Unter einer Hauptkette wird jeweils die längste durchgehende Kette verstanden, welche von der hydrophilen Gruppe ausgeht. Bevorzugt ist jedoch, dass der Kohlenstoffrest vollständig gesättigt ist, also nur Kohlenstoff-Kohlenstoff-Einfachbindungen umfasst. Gemäß einer weiteren Ausführungsform kann die hydrophobe Gruppe auch aromatische Gruppen enthalten, wobei gemäß einer weiteren Ausführungsform die aromatischen Gruppen nur Kohlenstoff- und Wasserstoffatome umfassen. Die aromatischen Gruppen können sowohl Teil der Hauptkette sein als auch seitenständig zu dieser angeordnet sein.

Die hydrophobe Gruppe wird gemäß einer Ausführungsform durch einen Alkylrest gebildet, welcher gemäß einer weiteren Ausführungsform zumindest eine Kette mit 3 bis 20 Kohlenstoffatomen, gemäß einer weiteren Ausführungsform zumindest eine Kette mit 5 bis 15 Kohlenstoffatomen und gemäß einer weiteren Ausführungsform zumindest eine Kette mit 6 bis 12 Kohlenstoffatomen umfasst. Gemäß einer Ausführungsform ist die Kohlenstoffkette unverzweigt und enthält gemäß einer weiteren Ausführungsform keine Heteroatome. Die Kohlenstoffkette wird bei dieser Ausführungsform also nur durch Kohlenstoff- und Wasserstoffatome gebildet. Gemäß einer weiteren Ausführungsform wird die hydrophobe Gruppe von einer einzelnen Kette bzw. Alkylgruppe gebildet, die mit der hydrophilen Gruppe verbunden ist. Eine besonders bevorzugte hydrophobe Gruppe ist die Octylgruppe.

Die polare, hydrophile Gruppe kann ein oder mehrzähnig, beispielsweise zweizähnig ausgebildet sein. Unter mehrzähnig wird dabei verstanden, dass die polare, hydrophile Gruppe mehrere polare oder geladene Gruppen umfasst, die jeweils direkt oder über eine Kohlenstoffkette an die hydrophobe Gruppe des Tensids gebunden sind. Bevorzugt ist die hydrophile Gruppe des Tensids einzähnig ausgebildet, d.h. das Tensid umfasst eine hydrophile Gruppe, beispielsweise eine Phosphonatgruppe, welche an die hydrophobe Gruppe gebunden ist, beispielweise eine geradkettige gesättigte Alkylgruppe mit 3 bis 20 Kohlenstoffatomen.

Gemäß einer bevorzugten Ausführungsform ist das im Kompositmaterial enthaltene Tensid ein ionisches Tensid und gemäß einer weiteren Ausführungsform ein anionisches Tensid.

Die hydrophile Gruppe des anionischen Tensids trägt gemäß einer Ausführungsform zumindest eine anionische Ladung, gemäß einer weiteren Ausführungsform eine oder zwei negative Ladungen.

Gemäß einer besonders bevorzugten Ausführungsform ist die anionische Gruppe eine Phosphonatgruppe.

Eine Phosphonatgruppe bzw. ein Phosphonat-Ion kann sehr gut mit Gruppen, wie einer Hydroxygruppe, wechselwirken, welche an den Kanten der delaminierten Lamellen des Schichtsilikats angeordnet sind. Die Wechselwirkung erfolgt nach Vorstellungen der Erfinder bevorzugt über an den Kanten der Schichtsilikatlamellen angeordnete OH-Gruppen.

Diese an Kanten der Schichtsilikatlamellen angeordneten OH-Gruppen können mit dem Phosphonat-Ion unterschiedliche Reaktionen eingehen, wie Kondensations-, Komplexierungs- oder Adsorptionsreaktionen, wodurch das Tensid an der Kante des Schichtsilikatplättchens fixiert wird. Auch eine Reaktion der Phosphonatgruppe mit den OH-Gruppen, welche an den Kanten durch Siliziumatome bereitgestellt werden, ist denkbar. Ferner kann die Phosphonatgruppe des Tensids auch mit zwei benachbarten Aluminiumatomen wechselwirken, welche an der Kante der Schichtsilikatlamellen angeordnet sind. Ferner ist auch eine elektrostatische Adsorption der Phosphonatgruppe des Tensids an geladene Gruppen möglich, die an den Kanten des Schichtsilikatplättchens angeordnet sind.

Wie bereits erläutert umfasst das erfindungsgemäße Kompositmaterial als Schichtsilikat bevorzugt Bentonit. Besonders vorteilhaft wird das Schichtsilikat, bevorzugt der Bentonit in leicht quellbarer Form bereitgestellt, sodass bei Kontakt mit Wasser das Schichtsilikat, bevorzugt der Bentonit leicht delaminieren kann und eine Vielzahl kleiner Schichtsilikatlamellen bereitgestellt wird, welche dann mit dem Tensid modifiziert sind. So hergestelltes Komposit vereinigt zwei Oberflächeneigenschaften. Zum einen bleibt die Fläche der Schichtsilikatlamelle, bevorzugt des Montmorillonitteilchens, weiterhin negativ geladen und somit frei für die Wechselwirkung mit geladenen -beispielsweise kationisch- geladenen Störstoffkomponenten. Zum anderen stellt die an die Schichtsilikatlamelle, beispielsweise das Montmorillonitpartikel gebundene Tensid über dessen hydrophobe Gruppe, beispielsweise eine Alkylkette, hydrophobe Eigenschaften bereit, durch welche das Kompositmaterial sehr gut mit hydrophoben Störstoffkomponenten wechselwirken kann. Dadurch können die Eigenschaften sowohl geladener als auch ungeladener Störstoffkomponenten modifiziert werden, sodass diese ihre klebenden Eigenschaften verlieren und beispielsweise bei der Papierherstellung in die Papierstruktur integriert werden.

Das Kompositmaterial, insbesondere in seiner delaminierten Form, weist also eine bimodale Funktionalität auf, d.h. es kann sowohl mit geladenen bzw. polaren Stoffen als auch mit unpolaren Stoffen in Wechselwirkung treten, sodass das Kompositmaterial ein sehr breites Spektrum an Störstoffen, wie sie beispielsweise bei der Papierherstellung anfallen, binden kann.

Gemäß einer bevorzugten Ausführungsform ist der Bentonit ein Natriumbentonit. Unter einem Natriumbentonit wird ein Bentonit verstanden, bei welchem der Anteil der austauschbaren Natriumionen an der Kationenaustauschkapazität zumindest 50 %, gemäß einer weiteren Ausführungsform zumindest 60 % und gemäß einer weiteren Ausführungsform zumindest 70 % beträgt. Die Prozentangaben beziehen sich auf Äquivalente. Der Anteil der Natriumionen an der Kationenaustauschkapazität kann auch 100 % betragen oder gemäß einer Ausführungsform >100 % betragen. Der Natriumbentonit wird dann in überaktivierter Form bereitgestellt. Gemäß einer Ausführungsform beträgt der Anteil der Natriumionen an der Kationenaustauschkapazität weniger als 120 %, gemäß einer weiteren Ausführungsform gleich oder weniger als 100 %.

Gemäß einer Ausführungsform wird der Bentonit im Kompositmaterial in alkalisch aktivierter Form bereitgestellt.

Bentonit enthält in seiner natürlich vorkommenden Form als austauschbare Kationen überwiegend ein- oder zweiwertige Kationen. In der überwiegenden Zahl der natürlich vorkommenden Bentonite werden die austauschbaren Kationen durch Calcium-, Magnesium-, sowie Natriumionen gebildet. Die überwiegend Calcium- bzw. Magnesiumionen enthaltenden Bentonite werden als Calciumbentonite bezeichnet. Unter einem überwiegenden Anteil wird dabei gemäß einer Ausführungsform verstanden, dass der Anteil an austauschbaren Calcium- und Magnesiumionen im Bentonit zumindest 50 %, gemäß einer weiteren Ausführungsform zumindest 60% und gemäß noch einer weiteren Ausführungsform zumindest 70 % beträgt. Gemäß einer Ausführungsform beträgt der Anteil der austauschbaren Calcium- und Magnesiumionen weniger als 100 %, gemäß einer weiteren Ausführungsform weniger als 90 %. Die Prozentangaben beziehen sich auf Äquivalente.

Die austauschbaren Kationen sind in den Zwischenschichten zwischen den einzelnen Schichten des Schichtsilikats angeordnet. Calciumbentonite quellen bei Kontakt mit Wasser nur in geringem Ausmaß. Durch Umsetzung mit Alkalisalzen, beispielsweise Soda, können die austauschbaren mehrwertigen Kationen gegen Alkaliionen ausgetauscht werden. Dies kann erfolgen, indem der Bentonit beispielsweise in feuchter Form im Soda verknetet wird. Durch den Austausch der mehrwertigen Kationen durch einwertige Alkalimetallionen, insbesondere Natriumionen, steigt die Quellfähigkeit des Bentonits stark an, sodass dieser beim Suspendieren in Wasser stark quillt und schließlich delaminiert, sodass der Bentonit in Form kleiner Bentonitlamellen vorliegt. Im Idealfall liegen nach dem Delaminieren einzelne Schichtsilikatlamellen vor. Meist erfolgt jedoch keine vollständige Delaminierung sondern es verbleiben auch noch Pakete mit beispielsweise bis zu 30 oder bis zu 20 Schichtsilikatlamellen. Unter einer Delaminierung soll daher auch ein Vorgang verstanden werden, bei welchem die entstehende Suspension derartige Pakete von Schichtsilikatlamellen umfasst. Unter einem alkalisch aktivierten Bentonit wird ein Bentonit verstanden, dessen austauschbare Kationen überwiegend durch Alkalimetallionen, insbesondere Natriumionen gebildet werden.

Unter einem überwiegenden Anteil der austauschbaren Kationen wird gemäß einer Ausführungsform verstanden, dass bezogen auf Äquivalente, zumindest 50 % der gesamten Kationenaustauschkapazität, gemäß einer weiteren Ausführungsform zumindest 70 % der gesamten Kationenaustauschkapazität des Bentonits durch Alkalimetallionen, insbesondere Natriumionen gebildet ist.

Gemäß einer Ausführungsform werden mehr als 95 % und gemäß einer weiteren Ausführungsform 100 % der gesamten Kationenaustauschkapazität des Bentonits durch Alkalimetallionen, insbesondere Natriumionen gebildet.

Gemäß einer Ausführungsform wird der alkalisch aktivierte Bentonit erhalten, indem der Ausgangsbentonit mit einer Menge an Alkalimetallsalz, insbesondere Soda umgesetzt wird, welche zumindest 100 % der Kationenaustauschkapazität des Bentonits entspricht, gemäß einer Ausführungsform zwischen 100 und 120 % der Kationenaustauschkapazität des Bentonits gewählt ist. Eine Überaktivierung des Bentonits ist möglich. Unter einer Überaktivierung wird verstanden, dass der Bentonit mit einer Menge an Alkalimetallsalz, insbesondere Natriumcarbonat umgesetzt wird, die größer ist, als die Menge, welche zum Erreichen einer zur Kationenaustauschkapazität (CEC) äquivalenten Menge an Natriumionen erforderlich ist.

Gemäß einer weiteren Ausführungsform weist das eingesetzte Schichtsilikat, insbesondere der Bentonit eine Kationenaustauschkapazität (CEC) von zumindest 85 meq/100 g, gemäß einer weiteren Ausführungsform von mindestens 90 meq/100 g und gemäß noch einer weiteren Ausführungsform eine Kationenaustauschkapazität von mindestens 95 meq/100g auf. Gemäß einer weiteren Ausführungsform weist das eingesetzte Schichtsilikat, insbesondere der Bentonit eine CEC von weniger als 120 meq/100 g auf.

Unter "Kationenaustauschkapazität" (CEC) wird dabei die Summe aller austauschbaren Kationen verstanden, angegeben in meq/100 g und bestimmt nach der CEC-Analysenmethode wie nachstehend im Beispielteil (Bestimmung der Kationenaustauschkapazität) erläutert. Die Kationenaustauschkapazität umfasst also beispielsweise die Summe aller austauschbaren zwei- und einwertigen Kationen, wie Calcium-, Magnesium-, Natrium-, Lithium- und Kaliumionen. Zur Bestimmung der Kationenaustauschkapazität wird das Schichtsilikat, insbesondere der Bentonit mit einer Ammoniumchloridlösung behandelt. Dabei werden wegen der hohen Affinität der Ammoniumionen zum Schichtsilikat, insbesondere Bentonit, praktisch alle austauschbaren Kationen durch Ammoniumionen ausgetauscht. Nach Abtrennen und Waschen wird der Stickstoffgehalt des Bentonits bestimmt und daraus der Gehalt an Ammoniumionen errechnet.

Es können sowohl natürliche Schichtsilikate, insbesondere Bentonite, als auch durch Aktivierung gewonnene Schichtsilikate, z.B. aus Calciumbentoniten gewonnene Natriumbentonite verwendet werden. Verfahren zur Erzeugung bzw. Aktivierung von Schichtsilikaten, insbesondere Bentoniten, sind dem Fachmann als solche bekannt und wurden bereits erläutert.

Beispielsweise kann von einem Calciumbentonit ausgegangen und dieser mit einem Alkalicarbonat, z.B. Natriumcarbonat behandelt werden. Bei der Behandlung bzw. Aktivierung kann das Schichtsilikat, insbesondere der Bentonit in an sich beliebiger, dem Fachmann geläufiger Weise mit dem Alkalicarbonat umgesetzt werden. Geeignet ist beispielsweise die Herstellung eines Feststoffgemisches, die Bereitstellung einer Suspension des Schichtsilikats, wobei das Alkalicarbonat, insbesondere das Natriumcarbonat zur Suspension gegeben wird. Eine weitere Möglichkeit der Aktivierung besteht darin, das Schichtsilikat mit einer Lösung des Natriumcarbonates zu besprühen.

Die im Weiteren anhand der Aktivierung eines Rohbentonits erläuterten Aktivierungsverfahren können analog auch auf andere Schichtsilikate angewandt werden.

Nach einer ersten Verfahrensvariante kann ein calciumhaltiger Rohbentonit mit einem Wassergehalt von vorzugsweise etwa 25 bis 40 Gew.-% mit festem Natriumcarbonat verknetet und die Mischung anschließend getrocknet und gemahlen werden. Der Rohbentonit wird bevorzugt auf Stücke von weniger als 3 cm Durchmesser vorgebrochen. Falls der Rohbentonit einen zu geringen Wassergehalt aufweist und daher schlecht geknetet werden kann, ist es auch möglich, den Wassergehalt des Rohbentonits durch Besprühen mit Wasser bzw. einer Natriumcarbonatlösung zu erhöhen.

Die Aktivierung kann beispielsweise auch wie folgt erfolgen: 350 g Rohbentonit mit einem Wassergehalt von etwa 30 bis 35 Gew.-%, werden in eine Mischvorrichtung (z.B. einen Werner & Pfleiderer-Mischer (Kneter)) gegeben und für 1 Minute geknetet. Dann wird unter Weiterlaufen der Mischvorrichtung die Menge an Natriumcarbonat (Soda) zugefügt, die der Differenz zwischen CEC und Natriumgehalt des Bentonits entspricht, und die Mischung für weitere 10 min geknetet. Die zugesetzten Mengen an Soda sind auf wasserfreien Bentonit bezogen. Bei Bedarf kann noch destilliertes Wasser zugegeben werden, um die Plastizität der Mischung zu verbessern. Nach dem Kneten wird die Mischung in kleine Stücke zerkleinert und in einem Umlufttrockenschrank bei etwa 75 °C 2 bis 4 Std. auf einem Wassergehalt von 10 + 2 Gew.-% getrocknet. Das Trockengut wird dann in einer Schlagrotormühle (z.B. in einer Retsch-Mühle) über einem 0,12 mm-Sieb vermahlen. Die CEC und der Anteil der Natriumionen hieran kann wie im Beispielteil beschrieben bestimmt werden.

Nach einer erfindungsgemäßen Ausführungsform bezieht sich der bevorzugte Anteil an einwertigen Kationen auf den Anteil der austauschbaren Natrium-, Kalium- und Lithiumionen, insbesondere der Natriumionen.

Nach einer weiteren Ausführungsform weist der Bentonit ein Quellvermögen von mindestens 25 ml/2g, gemäß einer weiteren

Ausführungsform von mindestens 30 ml/2g, und gemäß noch einer weiteren Ausführungsform von mindestens 35 ml/2g auf. Gemäß einer weiteren Ausführungsform weist der verwendete Bentonit ein Quellvermögen von weniger als 100 ml/2 g auf.

Gemäß einer weiteren Ausführungsform weist das Schichtsilikat, insbesondere der Bentonit, einen Anteil an Eisenionen an der CEC auf, der gemäß einer Ausführungsform geringer als 0,5% gewählt ist. Es hat sich gezeigt, dass solche Bentonite bessere Ergebnisse im Hinblick auf den Weißgrad der Papiermasse liefern. Die Prozentangaben beziehen sich auf Äquivalente.

Wie bereits erläutert, umfasst das erfindungsgemäße Kompositmaterial bevorzugt ein Schichtsilikat, insbesondere einen Bentonit, welcher sehr leicht delaminiert. Gemäß einer Ausführungsform ist daher vorgesehen, dass der Anteil von Calcium- und/oder Magnesiumionen an der CEC des Schichtsilikats, insbesondere des Bentonits, geringer als 20 %, gemäß einer weiteren Ausführungsform geringer als 18 %, gemäß einer weiteren Ausführungsform geringer als 15 % gewählt ist.

Die Prozentangaben beziehen sich jeweils auf Äquivalente.

Der Anteil des ionischen Tensids am Kompositmaterial beträgt gemäß einer Ausführungsform bezogen auf das Gewicht des trockenen Schichtsilikats, insbesondere Bentonits, mehr als 0,1 Gew.-%, gemäß einer weiteren Ausführungsform mehr als 0,5 Gew.-%. Gemäß einer weiteren Ausführungsform beträgt der Anteil des ionischen Tensides am Kompositmaterial weniger als 5 Gew.-%, gemäß einer weiteren Ausführungsform weniger als 2 Gew.-% und gemäß noch einer weiteren Ausführungsform weniger als 1 Gew.-%. Die Prozentangaben sind jeweils auf wasserfreies Schichtsilikat bzw. wasserfreien Bentonit bezogen. Unter einem trockenen Schichtsilikat wird ein Schichtsilikat verstanden, welches bei 120 °C unter Umgebungsdruck bis zur Gewichtskonstanz getrocknet wurde.

Die Erfindung betrifft weiterhin ein Verfahren zur Herstellung eines Kompositmaterials, wie es vorstehend beschrieben worden ist.

Zur Herstellung des Kompositmaterials können an sich die beiden Komponenten des Kompositmaterials, zumindest ein Schichtsilikat sowie zumindest ein Tensid, in beliebiger, dem Fachmann an sich bekannter Weise umgesetzt werden.

So kann gemäß einer ersten Ausführungsform das Schichtsilikat sowie das Tensid trocken vermischt und die Mischung dann in Wasser dispergiert werden.

Bei dieser Ausführungsform wird bevorzugt in der Weise vorgegangen, dass das Schichtsilikat, insbesondere der Bentonit, eine ausreichende Feuchte aufweist, um plastisch leicht verformt werden zu können. So ist gemäß einer Ausführungsform vorgesehen, dass das Schichtsilikat, insbesondere der Bentonit, einen Feuchtegehalt von 20 bis 40 Gew.-% aufweist. Sollte sich während der Herstellung des Kompositmaterials zeigen, dass das Schichtsilikat noch nicht ausreichend leicht plastisch verformbar ist, kann auch während des Vermischens, welches beispielsweise durch Kneten erfolgen kann, Wasser zugegeben werden. Das Tensid kann in wasserfreier Form zum Schichtsilikat gegeben werden. Es ist aber auch möglich, das Tensid als wässrige Lösung oder Suspension zum Schichtsilikat zu geben.

Nach dem Durchmischen kann die Mischung gegebenenfalls in kleinere Bruchstücke zerteilt und getrocknet werden. Anschließend kann das Kompositmaterial gemahlen werden, wobei eine übliche Korngröße eingestellt wird. Eine übliche Korngröße liegt im Bereich von 2 $\mu$m bis 2 mm.

An sich kann dabei vorgegangen werden, wie oben beschrieben. Um eine rasche Trocknung zu erreichen, wird die Mischung gemäß einer Ausführungsform zunächst zerkleinert. Dabei wird gemäß einer Ausführungsform eine Korngröße im Bereich von 1 bis 30 mm eingestellt. Die Einstellung der Korngröße kann beispielsweise mittels Sieben erfolgen.

Die zum Trocknen eingestellte Temperatur wird gemäß einer Ausführungsform in einem Bereich von 60 bis 120 °C, gemäß einer weiteren Ausführungsform im Bereich von 70 bis 90 °C gewählt. Um eine effiziente Feuchtigkeitsabfuhr zu erreichen, wird gemäß einer Ausführungsform während des Trocknens erwärmte Luft auf das Trockengut geleitet, wobei das Trockengut gemäß einer weiteren Ausführungsform während des Trocknens bewegt wird.

Das Trocknen wird gemäß einer Ausführungsform so lange durchgeführt, bis die Mischung einen Feuchtegehalt im Bereich von 5 bis 15 Gew.-%, gemäß einer weiteren Ausführungsform im Bereich von 8 bis 12 Gew.-% aufweist. Die Trocknungsdauer hängt dabei unter Anderem vom Feuchtegehalt der Mischung zu Beginn des Trocknens, der Korngröße des Trockenguts, der Menge der zu trocknenden Mischung, der verwendeten Trocknungsvorrichtung etc. ab. Sie kann vom Fachmann jedoch über den Feuchtegehalt des Trockengutes überwacht werden.

Nach einer Ausführungsform wird die Mischung nach dem Kneten in kleine Stücke zerkleinert und in einem Umlufttrockenschrank bei etwa 75 °C 2 bis 4 Std. auf einem Wassergehalt von 10 + 2 Gew.-% getrocknet.

Das Trockengut wird dann in einer Mühle zerkleinert und die Korngröße im gewünschten Bereich eingestellt. Als Mühlen werden gebräuchliche Vorrichtungen verwendet, beispielsweise eine Schlagrotormühle. Die Einstellung der Korngröße kann durch übliche Verfahren erfolgen, beispielsweise Sichten oder Sieben. Die Korngröße wird dabei bevorzugt kleiner als 0,5 mm, gemäß einer weiteren Ausführungsform kleiner als 0,3 mm und gemäß noch einer weiteren Ausführungsform kleiner als 0,2 mm gewählt. Gemäß einer weiteren Ausführungsform wird die Korngröße größer als 0,05 mm gewählt.

Gemäß einer Ausführungsform wird die Mischung nach dem Trocknen in einer Schlagrotormühle (z.B. in einer Retsch-Mühle) über einem 0,12 mm-Sieb vermahlen.

Weitere Ausführungsformen des Verfahrens wurden bereits weiter oben bei der Erläuterung des erfindungsgemäßen Kompositmaterials beschrieben.

Wie bereits erläutert, weist das erfindungsgemäße Kompositmaterial besonders gute Eigenschaften bei der Störstoffbindung in der Papierherstellung auf.

Gemäß einem weiteren Aspekt betrifft die Erfindung daher ein Verfahren zur Störstoffbindung in der Papierherstellung, umfassend die folgenden Schritte:

a) Bereitstellen eines Kompositmaterials wie es oben beschrieben worden ist;

b) Zugabe des Kompositmaterials gemäß a) zu einer zumindest einen Faserstoff enthaltenden Faserstoffsuspension, welche Störstoffe enthält;

c) Bindung der Störstoffe an das Kompositmaterial in der Faserstoffsuspension.

Im Rahmen der vorliegenden Erfindung wurde gefunden, dass durch die Verwendung eines mit einem Tensid modifizierten Schichtsilikats eine sehr gute Störstoffbindung in einem Verfahren zur Störstoffbindung in der Papierherstellung bereitgestellt werden kann.

Unter Störstoffen werden dabei sowohl klebrige Substanzen, in der Literatur auch als "Kleber" bzw. "Stickies" bezeichnet, als auch das sogenannte "Pitch" d.h. in erster Linie Baumharzkomponenten, verstanden. Eine detaillierte Auflistung der "Pitch" und "Stickies"-Bestandteile findet sich beispielsweise in der WO01/71092 auf den Seiten 1 und 2.

Die in der Faserstoffsuspension bzw. der Papierpulpe enthaltenen Störstoffe weisen zum überwiegenden Anteil eine anionische Ladung auf oder sind hydrophob. Das im Verfahren eingesetzte Kompositmaterial weist durch die Modifikation des Schichtsilikats mit zumindest einem Tensid ausgeprägt hydrophobe Eigenschaften auf. Das Kompositmaterial erhält dadurch eine sehr hohe Bindungswirkung an Störstoffe. Dadurch kann einerseits eine effiziente Modifizierung der Störstoffe erreicht werden, sodass diese in der Faserstoffsuspension verbleiben können, ohne dass die Blattbildung oder die Eigenschaften des Papiers oder der Pappe nachteilig beeinflusst werden. Andererseits kann die Menge an Kompositmaterial im Vergleich zu bisher verwendeten Adsorbentien für die Störstoffbindung geringer gewählt werden.

Das im Verfahren verwendete Kompositmaterial wurde bereits weiter oben genauer erläutert. Ausführungsformen des Kompositmaterials ergeben daher entsprechende Ausführungsformen des Verfahrens zur Störstoffbindung.

Das Kompositmaterial wird vorzugsweise in Form einer Suspension zur Fasersuspension gegeben. Die Suspension weist vorzugsweise einen Feststoffgehalt im Bereich von 0,5 bis 10 Gew.-%, vorzugsweise 1 bis 5 Gew.-% auf.

Das Verfahren unter Verwendung des hierin beschriebenen Kompositmaterials kann allgemein in allen Verfahren zur Papier- oder Kartonherstellung eingesetzt werden. Entsprechend sollen die Ausdrücke Papierpulpe und Faserstoffsuspension allgemein alle störstoffhaltigen Zusammensetzungen bzw. Ströme umfassen, die bei der Papierherstellung verwendet werden.

Nach einer weiteren Ausführungsform handelt es sich bei der Faserstoffsuspension bzw. der Pulpe um eine holzschliffhaltige Suspension. Bei Holzschliff handelt es sich allgemein um fein aufgeschlossenes fein gemahlenes Holz, das gemäß einer Ausführungsform keine weitere chemische oder thermische Behandlung erfahren hat. Die Holzschliffsuspension wird dabei entweder direkt nach dem Zerkleinern eingesetzt oder zunächst einer Peroxidbleiche unterzogen, wobei dann Peroxidgebleichter Holzschliff erhalten wird.

Es hat sich gezeigt, dass das erfindungsgemäße Kompositmaterial bei aus Holzschliff oder bei mit Peroxid behandeltem Holzschliff hergestellten Papiersorten besonders gute Ergebnisse zeigt.

Das erfindungsgemäße Verfahren kann aber auch vorteilhaft bei anderen Papierarten eingesetzt werden. So kann z.B. die Pulpe bzw. Faserstoffsuspension neben dem Holzschliff auch noch hochgereinigte Faseranteile enthalten, wie dies z.B. bei sogenanntem News Print Papier der Fall ist.

Das Verfahren liefert weiterhin sehr gute Ergebnisse bei sogenannter "Deinked Pulp" (DIP-Stoff). Dabei handelt es sich um einen Papierstoff, der aus Altpapier hergestellt wird. Dort fallen aus dem Kleber von Magazinen und Zeitungen insbesondere hydrophobe "Stickies" an. Auch diese lassen sich mit dem im Verfahren verwendeten Kompositmaterial gut in das Papier oder die Pappe einbinden.

Weitere sogenannte Papierstoffe, bei denen mit dem beschriebenen Verfahren Störstoffe in der hergestellten Papierbahn eingebunden werden können, umfassen TMP Stoff (Thermo Mechanical Pulp), Sulfatzellstoff, Sulfitzellstoff sowie Mischungen aus unterschiedlichen Zellstoffen. Je nach Papiertyp und Lokalisation der Papierfabrik werden solche Zellstoffe in unterschiedlichen Verhältnissen gemischt und auf die Materialanforderungen des Endproduktes hin angepasst.

Der Holzschliffanteil in der Papierpulpe bzw. Faserstoffsuspension liegt nach einer erfindungsgemäßen Ausführungsform bei mindestens 10 Gew.-%; insbesondere mindestens 30 Gew.-%, jeweils bezogen auf das Trockengewicht der gesamten Pulpe bzw. Suspension. Gemäß einer weiteren Ausführungsform liegt der Anteil des Holzschliffs in der Papierpulpe bei weniger als 60%.

Gemäß einer Ausführungsform enthält die Pulpe keinen Holzschliff.

Vorteilhaft verringert sich bei der Durchführung des erfindungsgemäßen Verfahrens der Bedarf an kationischen Ladungen im Papierstoffauflauf. Dies belegt die Bindung der negativ geladenen Störstoffe durch Ladungswechselwirkungen.

Die Konzentration der Störstoffe bei der Papierherstellung im Siebwasser kann beispielsweise durch die Bestimmung des Kationenbedarfs (kationischer Ladungsbedarf), Trübungsmessung sowie des chemischen Sauerstoffbedarfs ermittelt werden.

Beim Kationenbedarf geht man davon aus, dass die Störstoffe alle negativ geladen sind. Das Siebwasser wird über eine Packung kurzkettiger kationischer Polyelektrolyten filtriert. Der Verbrauch wird umgerechnet in den sogenannten Kationenbedarf.

Bei der Trübungsmessung geht man davon aus, dass die Störstoffe zum Teil kolloidal vorliegen und ihre Konzentration über die durch die Trübung verursachte Extinktion bestimmt werden kann.

Beim chemischen Sauerstoffbedarf wird über ein Oxidationsmittel der vorhandene Anteil an organischen Verbindungen ermittelt.

Obwohl diese Bestimmungsmethoden bei der Papierherstellung weit verbreitet sind, haben neuere Untersuchungen gezeigt, dass diese Methoden nur Mittelwerte über die gesamte Menge an Inhaltsstoffen im Siebwasser ergeben, wobei die verschiedenen Störstoffe unterschiedlich gewichtet sein können. So kann der Fall eintreten, dass kritische Störstoffe nur zum Teil erfasst werden und als Folge davon eine Über- bzw. Unterdosierung des Kompositmaterials zur Behandlung von Störstoffen vorgenommen wird. So weisen Baumharzkolloide, die hydrophobe Verbindungen enthalten, nur eine geringe Oberflächenladung auf und werden daher bei der Bestimmung des Kationenbedarfs nicht im vollen Umfang erfasst. Andererseits ergeben Lignine bei der Bestimmung im Siebwasser zwar einen hohen Kationenbedarf. Bei der Papierherstellung stören Lignine jedoch nur sehr wenig. Auch bei einer Trübungsmessung ist die Korrelation zur Konzentration an kolloidalen Störstoffen nicht immer gegeben.

Eine genauere Bestimmung der Störstoffkonzentration ist beispielsweise durch eine Analyse des Siebwassers nach der Methode von F. Orsa and B. Holmbom "A Convenient Method for the Determination of Wood Exctractives in Papermaking Process Waters and Effluents", Journal of Pulp and Paper Science, Vol 20 No. 12 December 1994, pp J361 möglich. Dabei wird die Konzentration der einzelnen Baumharzkomponenten durch ein gaschromatographisches Verfahren quantitativ bestimmt.

Weiterhin wurde von L. Vähäsalo et al. (a.a.O., siehe "Flowcytometrische Analyse des Siebwassers", weiter unten) gezeigt, dass durch Durchflusscytometrie die Anzahl kolloidaler Störstoffe in Papiersiebwässern sehr genau bestimmt werden kann.

Gemäß einer Ausführungsform enthält die Faserstoffsuspension, bezogen auf den Feststoffgehalt der Faserstoffsuspension, Störstoffe in einem Anteil von 0,01 bis 3 Gew.-%, gemäß einer weiteren Ausführungsform in einem Anteil von 0,05 bis 2 Gew.-%.

Das Kompositmaterial kann an sich an jeder dem Fachmann geeignet erscheinenden Stelle während der Papierherstellung zur Pulpe bzw. zur Faserstoffsuspension gegeben werden.

Gemäß einer Ausführungsform erfolgt die Zugabe des Kompositmaterials direkt im Pulper. Bei einer Zugabe bereits im Pulper ergibt sich eine lange Kontaktzeit zum Papierstoff, wodurch eine effiziente Störstoffbindung erreicht werden kann. Gemäß einer weiteren Ausführungsform kann das Kompositmaterial innerhalb des gesamten sogenannten Dickstoffbereichs zugegeben werden. Denkbar ist auch eine Zugabe für die "dissolved airflotation" zur Wasserreinigung.

Allgemein kann die bei den jeweils zur Papierherstellung verwendeten Vorrichtungen eine bereits vorhandene Zugabestelle für Additive, z.B. in Form einer Dosiervorrichtung oder Dosierpumpe, verwendet werden, um den Bentonit zur Papierpulpe oder zur Faserstoffsuspension zu geben. Das Kompositmaterial kann sowohl in Pulverform als auch in Form einer Aufschlämmung zugesetzt werden.

Gemäß einer Ausführungsform wird die Teilchengröße des Kompositmaterials so gewählt, dass der Nasssiebrückstand auf einem Sieb mit einer Netzweite von 45 $\mu$m weniger als 2 Gew.%, gemäß einer weiteren Ausführungsform weniger als 1 Gew.-%, und gemäß noch einer weiteren Ausführungsform weniger als 0,5 Gew.-% beträgt.

Die Bestimmung des Nasssiebrückstands ist vor den Beispielen näher erläutert. Die Teilchengröße kann auch nach der Lichtstreuungsmethode (Malvern) bestimmt werden.

Nach einer Ausführungsform liegt die mittlere Teilchengröße ($D_{50}$) (auf das Probenvolumen bezogen) zwischen 0,5 und 10 $\mu$m, insbesondere zwischen 2 bis 6 $\mu$m, besonders bevorzugt zwischen 3 und 5 $\mu$m. Gemäß einer Ausführungsform weisen mindestens 50 % der Teilchen eine mittlere Teilchengröße auf, die in einem Bereich von $D_{50} \pm 30$ % liegen.

Gemäß einer weiteren Ausführungsform des Verfahrens wird bei der Papierherstellung kein Talk zur Störstoffbindung eingesetzt.

Die Einsatzmengen des Kompositmaterials können vom Fachmann anhand empirischer Versuche bestimmt werden. Gemäß einer Ausführungsform werden Einsatzmengen zwischen 0,5 und 12 kg/t Papierpulpe bzw. Faserstoffsuspension, gemäß einer weiteren Ausführungsform zwischen 1 und 8 kg/t, und gemäß noch einer weiteren Ausführungsform zwischen 1,5 und 7 kg/t, jeweils bezogen auf die wasserfreie Pulpe/Suspension (Trockengewicht), ausgewählt.

Gemäß einer weiteren Ausführungsform wird die Faserstoffsuspension nach Bindung der Störstoffe an das Kompositmaterial zu einer Papierbahn verarbeitet.

Um zu einer Papierbahn verarbeitet werden zu können, enthält die Faserstoffsuspension gemäß einer Ausführungsform neben den Fasern noch übliche Stoffe, wie sie bei der Papierherstellung verwendet werden.

Gemäß einer Ausführungsform enthält die Faserstoffsuspension 0,1 bis 10 Gew.-%, gemäß einer weiteren Ausführungsform 0,4 bis 3 Gew.-% und gemäß noch einer weiteren Ausführungsform 0,6 bis 1,5 Gew.-% Fasern.

Als Fasern wird bevorzugt ein Cellulose-Fasermaterial eingesetzt. Ein solches Cellulose-Fasermaterial kann in üblicher Weise durch chemischen Aufschluss von Holz oder Einjahrespflanzen gewonnen werden. Die Zellstofffasern bestehen überwiegend aus Cellulose und können noch geringe Anteile von Polyosen oder Lignin enthalten. Als Fasermaterial kann aber beispielsweise auch ein Recyclingmaterial aus Altpapier verwendet werden. Ebenso können Gemische derartiger Materialien verwendet werden.

Ferner enthält die Faserstoffsuspension gemäß einer Ausführungsform, bezogen auf den Gehalt an Fasern, vorzugsweise bis zu 40 Gew.-%, gemäß einer Ausführungsform 5 bis 35 Gew.-% Füllstoffe.

Füllstoffe machen durch das Ausfüllen der Zwischenräume zwischen den Fasern das Papier weicher und geschmeidiger und geben ihm eine glatte Oberfläche. Der Masseanteil der Füllstoffe drückt sich in der Aschezahl aus.

Als Füllstoffe können in der Papierherstellung übliche Füllstoffe eingesetzt werden. Geeignete Füllstoffe sind beispielsweise Kaolin, Talkum, Titandioxid, Stärke, Magnesiumcarbonat, Bariumsulfat, Zinksulfid, Calciumsilikate und Calciumcarbonat. Anorganische Füllstoffe sind dabei bevorzugt.

Der Füllstoff weist bevorzugt eine mittlere Partikelgröße ($D_{50}$) von weniger als 10 $\mu$m, bevorzugt weniger als 5 $\mu$m und gemäß einer weiteren Ausführungsform eine Partikelgröße von weniger als 1 $\mu$m auf. Gemäß einer Ausführungsform beträgt die mittlere Partikelgröße $D_{50}$ des Füllstoffs zumindest 10 nm, gemäß einer weiteren Ausführungsform zumindest 100 nm. Gemäß einer Ausführungsform weisen die Füllstoffpartikel eine Größe ($D_{100}$) von weniger als 1 mm, gemäß einer weiteren Ausführungsform von weniger als 500 $\mu$m und gemäß einer weiteren Ausführungsform von weniger als 300 $\mu$m auf. Die Werte beziehen sich auf zahlengemittelte Werte.

Der Anteil des Füllstoffs wird gemäß einer Ausführungsform geringer als 50 Gew.-%, gemäß einer weiteren Ausführungsform geringer als 40 Gew.-% gewählt, und beträgt gemäß einer Ausführungsform mehr als 10 Gew.-%, gemäß einer weiteren Ausführungsform mehr als 20 Gew.-%, gemäß noch einer weiteren Ausführungsform mehr als 30 Gew.-%. Die Prozentangaben beziehen sich auf das Trockengewicht der Faserstoffsuspension.

So wird gemäß einer Ausführungsform Kaolin als Füllstoff eingesetzt. Kaolin bleibt über einen weiten pH-Bereich chemisch inert und kann deshalb sowohl in sauren als auch in alkalischen Produktionsverfahren verwendet werden.

Gemäß einer weiteren Ausführungsform wird Calciumcarbonat als Füllstoff eingesetzt. Calciumcarbonat weist im Vergleich zu Kaolin einen höheren Weißgrad auf, was insbesondere bei der Herstellung von Recyclingpapier vorteilhaft ist. Man unterscheidet zwischen gemahlenem Calciumcarbonat (ground calcium carbonate, GCC) und gefälltem Calciumcarbonat (precipitated calcium carbonate, PCC). Gemahlenes Calciumcarbonat wird aus $CaCO_3$-haltigen Mineralien durch Mahlund Sichtprozesse unter Einsatz von Mahlhilfsmitteln hergestellt, wie Kalkstein, Kreide oder Marmor. GCC hat ein großes Helligkeitsspektrum. Wird ein hoher Helligkeitsgrad gefordert, wird meist Marmor als Ausgangsstoff verwendet. Die spezifische Oberfläche liegt vorzugsweise im Bereich von 6 bis 2 m$^2$/g.

Gefälltes Calciumcarbonat ist ein synthetisches Industriemineral, das aus gebranntem Kalk oder Kalkstein hergestellt wird. Als synthetisches Produkt kann PCC in seinen Eigenschaften modifiziert werden, um so die Eigenschaften des Papiers zu beeinflussen. So können durch die bei der Herstellung von PCC eingestellten Reaktionsparameter die Körnung, die Kornform, die spezifische Oberfläche und die Oberflächenchemie sowie die Korngrößenverteilung beeinflusst werden. Mit PCC können daher die Eigenschaften des Papiers gesteuert werden, wie dessen Helligkeit oder dessen Lichtdurchlässigkeit oder auch die Dicke der Papierschicht. PCC wird durch Einleiten von Kohlendioxid in Calciumhydroxidlösung hergestellt. Die spezifische Oberfläche kann stark durch die Wahl der Fällungsbedingungen beeinflusst werden. Sie liegt vorzugsweise im Bereich von 6 bis 13 m$^2$/g.

Neben Füllstoffen können auch noch Farbstoffe sowie optische Aufheller in der Faserstoffsuspension enthalten sein. Hier können gemäß einer Ausführungsform synthetische Farbstoffe verwendet werden. Um das Papier beschreibbar zu machen, werden gemäß einer Ausführungsform noch Leimungsstoffe zugegeben. Das Papier wird dadurch weniger saugfähig und weniger hygroskopisch. Als Leimstoffe können gemäß einer Ausführungsform chemisch modifizierte Baumharze in Kombination mit sauren Salzen, wie Kalialaun oder Aluminiumsulfat verwendet werden. Gemäß einer weiteren Ausführungsform können Polymere auf Basis von Acrylaten oder Polyurethanen als Leimstoffe eingesetzt werden. Der Anteil der Leimungsstoffe wird in einem für die Papierherstellung üblichen Bereich gewählt. Gemäß einer Ausführungsform wird der Anteil der Leimungsstoffe bezogen auf das Trockengewicht der Fasern, geringer als 1 Gew.-% und gemäß einer Ausführungsform in einem Bereich von 0,001 bis 0,5 Gew.-% gewählt.

Die Faserstoffsuspension durchläuft vorzugsweise mindestens eine Reinigungs-, Misch- und/oder Pumpstufe. Das Scheren der Faserstoffsuspension kann beispielsweise in einem Pulper, Sichter oder in einem Refiner erfolgen.

Bei der Herstellung der Papierbahn ist wichtig, dass das Wasser der Faserstoffsuspension schnell abfließt, ohne dass dabei wesentliche Anteile an Fasern oder Füllstoffen mit dem Wasser ausgetragen werden und damit verloren gehen. Ferner soll sich eine stabile Papierstruktur ausbilden.

Zur Prozessoptimierung sowie um spezifische Papiereigenschaften zu erreichen werden gemäß einer Ausführungsform im Verlauf der Herstellungskette Additive zur Faserstoffsuspension zudosiert. Geeignet sind beispielsweise Additive, die zur Erhöhung bzw. Verbesserung der Retention und Drainage bei der Papierherstellung beitragen. Bei der Retention ist die Zielsetzung, so viel wie nur möglich von dem eingesetzten Füllstoff in der Papiermasse zurückzuhalten. Bei der Drainage geht es darum, das Wasser der Suspension während der Blattbildung in der Papiermaschine so schnell wie nur möglich abfließen zu lassen, damit schnell ein trockenes Papierblatt formiert werden kann.

Die Blattbildung ist ein sehr schnell verlaufender Filtrationsprozess. Geht man von einer reinen Faserstoffsuspension aus, in der keine besonderen Wechselwirkungen zwischen den Fasern auftreten, kann sich im ungünstigen Fall bei der Filtration durch die turbulente Strömung eine ungeordnete Vliesstruktur ausbilden. Das Vlies kann dann ungeordnete Schwankungen beispielsweise in der Papierdicke oder dem Flächengewicht aufweisen. Enthält die Faserstoffsuspension Füllstoffe, besteht die Möglichkeit, dass diese bei der Filtration vom Sieb nicht zurückgehalten und daher mit dem abfließenden Wasser zum überwiegenden Teil ausgewaschen werden. Das Blatt würde bei einer solchen Prozessführung dann keinen oder nur geringe Mengen Füllstoff enthalten.

Gemäß einer Ausführungsform werden der Faserstoffsuspension chemische Additive zugesetzt, die sowohl mit den Fasern als auch mit den Füllstoffpartikeln wechselwirken können. Durch diese Wechselwirkungen kann es bereits vor der Filtration zur Ausbildung größerer Aggregate aus Fasern und Füllstoffpartikeln kommen. Die Faserstoffsuspension flockt unter Ausbildung größerer Flocken aus, in denen Fasern und Füllstoffpartikel gebunden sind. Durch das chemische Additiv, gemäß einer Ausführungsform ein geladenes Polymer, enthalten die Flocken selbst eine Ladung. Diese Flocken weisen allerdings eine geringe mechanische Festigkeit auf, sodass sie unter Einwirkung von Scherkräften leicht zerteilt werden können.

Als Additive können gemäß einer Ausführungsform in der Papierherstellung übliche Zweikomponenten- und Mehrkomponenten-Retentions- und -Drainagesystemen eingesetzt werden.

Bei den dualen Retentions- und Drainagesystemen wird zur Faserstoffsuspension zunächst ein hochmolekulares kationisches Polymer zugegeben, um die Fasern in Form von Flocken aus der Faserstoffsuspension auszufällen. Als kationisches Polymer können beispielsweise Polyethylenimin, Polyaminoepichlorhydrinprodukte, Polymere von Diallyldimethylammoniumchlorid und Polymere von Acrylmonomeren, die ein kationisches Acrylmonomer umfassen, verwendet werden.

Nach einem eventuell sich anschließenden Schritt, in welchem die ausgeflockte Suspension beispielsweise durch Rühren Scherkräften ausgesetzt wird, um Mikroflocken herzustellen, wird eine anorganische Mikrokomponente zugegeben, welche eine Verbindung der Flocken und nach dem Abtrennen des Wassers die Ausbildung einer stabilen Papierstruktur bewirkt.

Als anorganische Mikrokomponente kommen beispielsweise Bentonit, kolloidale Kieselsäure, Silikate und/oder Calciumcarbonat in Betracht. Die Partikelgröße der anorganischen Mikrokomponente wird vorzugsweise sehr klein gewählt und beträgt vorzugsweise weniger als 200 $\mu$m, gemäß einer weiteren Ausführungsform weniger als 150 $\mu$m und liegt gemäß einer weiteren Ausführungsform bevorzugt im Bereich von 10 nm bis 100 $\mu$m. Die Größe der Mikropartikel bezieht sich auf die mittlere Größe $D_{50}$ der Mikropartikel und wird vorzugsweise durch optische Methoden wie Lichtstreuung bestimmt und gibt den zahlengemittelten Wert an. Vorzugsweise weisen zumindest 50 % der Partikel eine Größe im Bereich von $\pm$ 30 % vom Mittelwert auf. Die anorganische Mikrokomponente weist vorzugsweise eine anionische Ladung auf, sodass sie mit Faserflocken in Wechselwirkung treten kann, die vorzugsweise eine kationische Überschussladung aufweisen.

Die als anorganische Mikrokomponente eingesetzten Schichtsilikate werden vorzugsweise für die Anwendung aktiviert, das heißt in eine in Wasser quellbare Form überführt, indem man die Schichtsilikate mit einem Alkalimetallsalz behandelt, beispielsweise Soda. Vorzugsweise werden Schichtsilikate, insbesondere Bentonit, als anorganische Mikrokomponente eingesetzt.

Die anorganische Mikrokomponente wird vorzugsweise in Form einer Suspension zur Faserstoffsuspension gegeben. Die Suspension weist vorzugsweise einen Feststoffgehalt im Bereich von 0,5 bis 10 Gew.-%, vorzugsweise 1 bis 5 Gew.-% auf. Bei der Verwendung von Schichtsilikaten als anorganische Mikrokomponente wird das Schichtsilikat vorzugsweise in möglichst vollständig delaminierter Form eingesetzt. Der Lamellendurchmesser des im Wasser dispergierten Schichtsilikats liegt vorzugsweise im Bereich von 1 bis 2 $\mu$m, die Dicke der Lamellen liegt vorzugsweise bei 0,1 bis 10 nm, gemäß einer Ausführungsform im Bereich von 1 bis 5 nm. Der Bentonit weist vorzugsweise eine spezifische Oberfläche im Bereich von 60 bis 800 m$^2$/g auf. Die Bestimmung der spezifischen Oberfläche kann nach DIN 66131 mit Hilfe der Stickstoffporosimetrie ermittelt werden.

Als kolloidale Kieselsäure bzw. als Silikate können Produkte aus der Gruppe von auf Silicium basierenden Partikeln, Silica-Nitrogele, Silica-Sole, Aluminiumsilikate, Borsilikate, Polyborsilikate oder Zeolithe eingesetzt werden. Diese Materialien haben typischerweise eine spezifische Oberfläche im Bereich von 50 bis 1000 m$^2$/g und eine durchschnittliche Teilchengrößenverteilung von 1 bis 250 nm, beispielsweise im Bereich von 40 bis 100 nm.

Als anorganische Mikrokomponente werden bevorzugt silikatische Materialien, besonders bevorzugt Schichtsilikate und insbesondere bevorzugt Bentonite eingesetzt.

Die anorganische Mikrokomponente des Flockungssystems wird der wässrigen Faserstoffsuspension bevorzugt in einer Menge von 0,01 bis 1,0 Gew.-%, weiter bevorzugt in einer Menge von 0,1 bis 0,5 Gew.-%, bezogen auf den Feststoffgehalt der Faserstoffsuspension, zugesetzt.

Die ausgeflockte Faserstoffsuspension wird dann in üblicher Weise zu einem Papier oder Pappe verarbeitet. Diese kann beispielsweise, vorzugsweise ohne weitere Einwirkung von Scherkräften, auf einem Sieb unter Blattbildung ausgegossen werden. Die Papierblätter werden anschließend getrocknet.

Dabei ist gewünscht, dass der Bentonit in möglichst stark delaminierter Form vorliegt, sodass eine hohe Anzahl von Partikeln zum Verbinden der Flocken zur Verfügung steht.

Die Mischung wird dann entwässert und dazu beispielsweise auf ein Sieb gegeben, sodass das Wasser ablaufen und sich eine stabile Papierschicht ausbilden kann. Duale Retentions- und Drainagesysteme werden häufig auch als Mikropartikelsysteme bezeichnet und können beispielsweise auch eine Kombination aus einem oder mehreren kationischen Polymeren und anionisch geladenen Mikropartikeln, wie beispielsweise anionisch geladenen organischen Komponenten, Silicapartikeln oder quellfähigen Tonmaterialien umfassen. Ein handelsübliches, am Markt erhältliches duales Retentions- und Drainagesystem ist beispielsweise das Hydrocol® System.

Ein duales Retentions- und Drainagesystem wird beispielsweise in der EP 0 235 893 B2 beschrieben. Dabei wird eine wässrige Cellulosesuspension zunächst mit einem im Wesentlichen linearen synthetischen kationischen Polymer mit einem Molekülgewicht von über 500.000 g/mol ausgeflockt. Das kationische Polymer wird in einer Menge von wenigstens 0,03 Gew.-% bezogen auf das Trockengewicht der Suspension zugegeben. Die durch Zugabe des Polymers gebildeten Flocken werden durch Scheren unter Ausbildung von Mikroflocken aufgebrochen, die einem weiteren Abbau durch Scheren widerstehen und ausreichend kationische Ladung tragen, sodass sie mit Bentonit, welcher der Suspension nach dem Scheren zugegeben wird, in Wechselwirkung treten können. Die erneut ausgeflockte Suspension wird dann zu einer Papierbahn verarbeitet. Der Bentonit wird bevorzugt in delaminierter Form zugegeben. Er wird bevorzugt als hydratisierte Suspension eingesetzt, die durch Dispergieren von pulverförmigem Bentonit in Wasser erhalten worden ist. Der Bentonit wird in einer Menge von 0,03 bis 0,5 Gew.-%, bezogen auf das Trockengewicht der Suspension, zugesetzt.

Mit dem erfindungsgemäßen Verfahren werden gefüllte Papiere oder Pappe hergestellt. Geeignete Füllstoffe wurden bereits weiter oben beschrieben.

Die mit dem Kompositmaterial behandelte Faserstoffsuspension kann dann auf üblichen Vorrichtungen zu einer Papierbahn weiterverarbeitet werden.

Bei der industriellen Papierherstellung findet die Blattbildung auf Papiermaschinen statt. Dabei wird ein gereinigter und entlüfteter Papierbrei, der zu etwa 99 % aus Wasser besteht und etwa 1 % Zellstofffasern enthält, im Stoffauflauf zu einem dünnen, möglichst gleichförmigen Strahl geformt. Dieser wird bei Langsiebpapiermaschinen auf ein rotierendes, endloses Sieb gegeben. Innerhalb weniger Sekunden läuft der überwiegende Teil des Wassers ab und es bildet sich eine Papierstruktur aus. Langsiebmaschinen können bis zu einer Geschwindigkeit von etwa 1200 m/min arbeiten. Bei höheren Geschwindigkeiten wird die Papierbildung durch Luftverwirbelungen gestört. Moderne Papiermaschinen, sogenannte Gap-Former, produzieren mit Geschwindigkeiten von bis zu 2000 m/min bei Arbeitsbreiten von mehr als 10 m. Hierbei wird der Papierbrei direkt in einen Spalt zwischen zwei rotierende Siebe gespritzt. Neben der höheren Laufgeschwindigkeit bieten Gap-Former auch den Vorteil einer deutlich gleichmäßigeren Entwässerung und in der Folge eine verminderte Zweiseitigkeit des Papiers. Am Ende des Siebes wird die weiche Papierbahn auf einen Filz übergeben und gelangt in die Pressenpartie, wo die Papierbahn mittels gegeneinander gepresster Walzen zwischen Filzen entwässert wird. In der Trockenpartie findet schließlich die endgültige Entwässerung statt, wobei die Papierbahn durch eine Anzahl dampfbeheizter Trockenzylinder läuft. Anschließend wird die Papierbahn noch geglättet und aufgerollt. Für hochglatte und scharf satinierte Papiere kann vor dem endgültigen Aufrollen noch ein weiterer Glättungsschritt im Kalander durchgeführt werden.

Neben den oben beschriebenen dualen Flockungs- und Retentionssystemen werden auch Mehrkomponentensysteme zur weiteren Verarbeitung der Faserstoffsuspension eingesetzt.

Mehrkomponentensysteme beinhalten neben einem hochmolekularen kationischen Polymer und einem anionischen Mikropartikel, wie einem Schichtsilikat oder Silicapartikel, noch ein hoch vernetztes organisches Mikropartikel. Mit einem derartigen Dreikomponentensystem kann nicht nur die Füllstoffretention deutlich verbessert werden, sondern auch die Retention unabhängig von der Drainage beeinflusst werden. Dies bedeutet, dass die Füllstoffretention mit der dritten und eventuell auch einer vierten Komponente variiert werden kann, ohne dass dabei die Drainage negativ beeinflusst wird. Ein bekanntes Mehrkomponentensystem auf dem Markt wird unter der Marke Telioform® angeboten.

Die Erfindung wird im Weiteren unter Bezugnahme auf die beigefügten Figuren näher erläutert. Dabei zeigt:

Fig. 1: eine modellhafte Darstellung der Anhaftung einer Alkylphosphonsäure an der Kante einer Montmorillonitlamelle;

Fig. 2: eine modellhafte Darstellung einer Montmorillonitlamelle und mögliche Reaktionen mit einem Phosphonat-Ion;

Fig. 3: ein Diagramm, in welchem der Anteil der klebrigen (störenden) Teilchen pro ml Siebwasser aufgetragen ist, wie es aus flowzytrometischen Messungen ermittelt wurde.

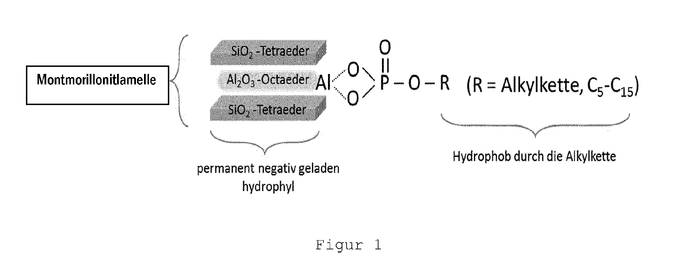

Fig. 1 zeigt die Modellvorstellung der Koordination eines Tensids an die Kante einer Montmorillonitlamelle. An der Kante der Montmorillonitlamelle sind an Aluminiumatome koordinierte Hydroxylgruppen angeordnet, wodurch die Kante der Montmorillonitlamelle hydrophile Eigenschaften aufweist. An die Hydroxygruppen sowie die Aluminiumatome können nun die Phosphonatgruppen des Tensids anknüpfen, sodass an der Kante der Montmorillonitlamelle Alkylketten angeordnet werden, die einen hydrophoben Charakter aufweisen. Dadurch ändern sich die Eigenschaften der Montmorillonitlamelle deutlich, die nun insgesamt deutlich hydrophobere Eigenschaften aufweist.

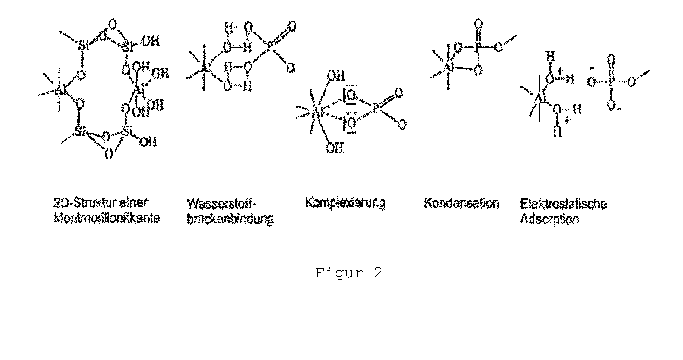

Fig. 2 zeigt schematisch verschiedene Möglichkeiten der Anknüpfung der Phosphonatgruppe an die an Kanten der Montmorillonitlamelle angeordnete Hydroxygruppen und Aluminiumatome. Gezeigt werden eine Anknüpfung durch Wasserstoffbrückenbindung, Komplexierung, Kondensation und elektrostatische Adsorption.

Analysenmethoden:

1. Bestimmung der Kationenaustauschkapazität (CEC-Analyse) und der Kationenanteile

Prinzip: Der Ton wird mit einem großen Überschuss an wässriger $NH_4Cl$-Lösung behandelt, ausgewaschen und die auf dem Ton verbliebene $NH_4^+$-Menge nach Kjeldahl bestimmt.

$$Me^+ (Ton) - + NH_4^+ \rightarrow NH_4^+ (Ton)^- + Me^+$$

$$(Me^+ = H^+, K^+, Na^+, 1/2\ Ca^{2+}, 1/2\ Mg^{2+}....)$$

Geräte: Sieb, 63 $\mu$m; Erlenmeyer-Schliffkolben, 300 ml; Analysenwaage; Membranfilternutsche, 400 ml; Zellulose-Nitrat-Filter, 0,15 $\mu$m (Fa. Sartorius) ; Trockenschrank; Rückflusskühler; Heizplatte; Destillationseinheit, VAPODEST-5 (Fa. Gerhardt, No. 6550) ; Messkolben, 250 ml; Flammen-AAS.

Chemikalien: 2N $NH_4Cl$-Lösung Neßlers-Reagens (Fa. Merck, Art. Nr. 9028); Borsäure-Lösung, 2 %-ig; Natronlauge, 32 %-ig; 0,1 N Salzsäure; NaCl-Lösung, 0,1 %-ig; KCl-Lösung, 0,1 %-ig.

Durchführung: 5 g Ton werden durch ein 63 $\mu$m-Sieb gesiebt und bei 110 °C getrocknet. Danach werden genau 2 g auf der Analysenwaage in Differenzwägung in den Erlenmeyer-Schliffkolben eingewogen und mit 100 ml 2N $NH_4Cl$-Lösung versetzt. Die Suspension wird unter Rückfluss eine Stunde lang gekocht. Bei stark $CaCO_3$-haltigen Bentoniten kann es zu einer Ammoniak-Entwicklung kommen. In diesen Fällen muss solange $NH_4Cl$-Lösung zugegeben werden, bis kein Ammoniakgeruch mehr wahrzunehmen ist. Eine zusätzliche Kontrolle kann mit einem feuchten Indikator-Papier durchgeführt werden. Nach einer Standzeit von ca. 16 h wird der $NH_4^+$-Bentonit über eine Membranfilternutsche abfiltriert und bis zur weitgehenden Ionenfreiheit mit VE-Wasser (ca. 800 ml) gewaschen. Der Nachweis der Ionenfreiheit des Waschwassers wird auf $NH_4^+$-Ionen mit dem dafür empfindlichen Neßlers-Reagens durchgeführt. Die Waschzahl kann je nach Tonart zwischen 30 Minuten und 3 Tagen variieren. Der ausgewaschene $NH_4^+$-Bentonit wird vom Filter abgenommen, bei 110 °C 2h lang getrocknet, gemahlen, gesiebt (63 $\mu$m-Sieb) und nochmals bei 110 °C 2 h lang getrocknet. Danach wird der $NH_4^+$-Gehalt des Bentonits nach Kjeldahl bestimmt.

Berechnung der CEC: Die CEC des Tons ist der mittels Kjeldahl ermittelte $NH_4^+$-Gehalt des $NH_4^+$-Bentonits . Die Angaben erfolgen in meq/100 g Ton.

Beispiel: Stickstoff-Gehalt = 0,93 %;

Molmasse: N = 14,0067 g/mol

$$CEC = \frac{0{,}93 \times 1000}{14{,}0067} = 66{,}4\ meq/100g$$

CEC = 66,4 meq/100 g $NH_4^+$-Bentonit

Ausgetauschte Kationen und deren Anteile:

Die durch den Umtausch freigesetzten Kationen befinden sich im Waschwasser (Filtrat). Der Anteil und die Art der einwertigen Kationen ("austauschbare Kationen") wurde im Filtrat gemäß DIN 38406, Teil 22, spektroskopisch bestimmt. Beispielsweise wird zur AAS-Bestimmung das Waschwasser (Filtrat) eingeengt, in einen 250 ml Messkolben überführt und mit VE-Wasser bis zur Messmarke aufgefüllt. Geeignete Messbedingungen für FAAS sind aus den nachfolgenden Tabellen zu entnehmen.

| Element | Calcium | Kalium | Lithium | Magnesium | Natrium |
|---|---|---|---|---|---|
| Wellenlänge (nm) | 422,7 | 766,5 | 670,8 | 285,2 (202,6) | 589,0 |
| Spaltbreite (nm) | 0,2 | 0,5 | 0,5 | 0,5 | 0,2 |
| Integr. Zeit (sec) | 3 | 3 | 3 | 3 | 3 |
| Flammengase | $N_2O/C_2H_5$ | Luft/ $C_2H_5$ | Luft/ $C_2H_5$ | $N_2O/C_2H_5$ | Luft/ $C_2H_5$ |
| Untergrundkomp.: | nein | nein | nein | Ja | nein |
| Messart | conc. | Conc. | Conc. | Conc. | Conc. |
| Ionisations- puffer | 0,1%KCl | 0,1%NaCl | 0,1%NaCl | 0,1%KCl | 0,1%KCl |
| Brennerposition | 15-20° | -- | -- | -- | -- |
| Eichstand (mg/l) | 1-5 mg/l | 1-5 mg/l | 2-10 mg/l | 0,5-3 mg/l (5-40 mg/l) | 1-5 mg/l |

| Element | Aluminium | Eisen |
|---|---|---|
| Wellenlänge (nm) | 309,3 | 248,3 |
| Spaltbreite (nm) | 0,5 | 0,2 |
| Integr. Zeit (sec) | 3 | 3 |
| Flammengase | $N_2O/C_2H_5$ | Luft/ $C_2H_5$ |
| Untergrundkomp.: | ja | nein |
| Messart | conc. | Conc. |
| Ionisations- puffer | 0,1%KCl | -- |
| Brennerposition | -- | -- |
| Eichstand (mg/l) | 10-50 mg/l | 1-5 mg/l |

Berechnung der Kationen:

$$Me = \frac{Me\text{-Wert (mg/l)} \times 100 \times \text{Verdünnung}}{4 \times \text{Einwaage (in g)} \times \text{Molmasse (g/mol)}} = meq/100g$$

Molmassen (g/mol): Ca=20,040; K=39,096; Li=6,94; Mg=12,156; Na=22,990; Al=8,994; Fe=18,616

Bei sogenannten überaktivierten Bentoniten, d.h. solchen, die mit einer größeren als der stöchiometrischen Menge an z.B. Soda aktiviert wurden, kann die Summe der ermittelten Mengen an einwertigen Kationen die wie vorstehend angegeben bestimmte CEC übertreffen. In solchen Fällen wird der Gesamtgehalt an einwertigen Kationen (Li, K, Na) als 100% der CEC angesehen.

2. Bestimmung der BET-Oberfläche

Die Bestimmung erfolgte gemäß DIN 66131 (Mehrpunktbestimmung)

3. Bestimmung des Nasssiebrückstandes:

Bei dem Einsatz von Pigmenten und Füllstoffen interessiert es, ob und wie viel grobe Anteile das zu untersuchende Material enthält, die sich durch ihre Korngrösse von den normalen Teilchen unterscheiden. Diese Anteile werden durch Siebung einer wässrigen Suspension mit Wasser als Spülflüssigkeit ermittelt. Als Nasssiebrückstand gilt der unter festgelegten Bedingungen ermittelte Rückstand.

Geräte: Analysenwaage, Plastikbecher, Pendraulik LD 50; Sieb: 200 mm Durchmesser, Maschenweite 0,025 (25 $\mu$m) , 0,045 mm (45 $\mu$m) , 0,053 mm (53 $\mu$m) oder 0,063 mm (63 $\mu$m); Ultraschallbad. Es wurde zunächst eine 5 %ige Suspension des Bentonits (otro, d.h. nach Trocknung bei 110 °C) in 2000 g Wasser hergestellt. Hierzu wird der Bentonit bei 930 UpM in ca. 5 min eingerührt. Nach einer Rührzeit von weiteren 15 min bei 1865 UpM wird die Suspension in das gesäuberte und getrocknete Sieb (Maschenweite 45 $\mu$m) gegossen und mit fließendem Leitungswasser unter Klopfen so lange gewaschen, bis das Waschwasser klar abläuft. Nach dem Waschen des Siebrückstandes mit Leitungswasser setzt man das Sieb für 5 min in ein Ultraschallbad, um die restlichen Feinanteile abzusieben. Es ist darauf zu achten, dass beim Einsetzen des Siebes im Ultraschallbad zwischen Wasseroberfläche und Siebboden keine Luft verbleibt. Nach der Ultraschallbehandlung nochmals mit Leitungswasser kurz nachspülen. Danach wird das Sieb entnommen und das Wasser im Ultraschallbad erneuert. Der Arbeitsvorgang im Ultraschallbad wird wiederholt, bis keine Verunreinigung des Wassers mehr zu erkennen ist. Das Sieb mit dem verbliebenen Rückstand wird bis zur Gewichtskonstanz (otro) im Umlufttrockenschrank getrocknet. Nach dem Abkühlen wird der Rückstand mit dem Pinsel in eine Schale überführt. Auswertung: Nasssiebrückstand (NSR) in (%) anhand der Auswaage.

4. Teilchengrößenbestimmung nach Malvern:

Dabei handelt es sich um ein gängiges Verfahren. Es wurde ein Mastersizer der Firma Malvern Instruments Ltd, UK, entsprechend der Angaben des Herstellers eingesetzt. Die Messungen wurden mit der vorgesehenen Probenkammer ("dry powder feeder") in Luft durchgeführt und die auf das Probenvolumen bezogenen Werte ermittelt.

5. Untersuchung der Störstoffbindung: Bei der Untersuchung der Störstoffbindung wurde wie folgt vorgegangen:

a) Herstellung von Papierstoff und Filtration:

Der gewählte Papierstoff (z.B. 45 % Zellstoff und 55% peroxidgebleichter Holzschliff) kann entweder direkt aus der Papierfabrik erhalten werden, oder vor dem Einsatz im Kühlschrank aufbewahrt werden. Der Papierstoff wurde dann gut geschüttelt bei 20 g atro auf 2% mit warmem entionisiertem Wasser in einem 2000ml Becherglas verdünnt. Während mit 400 UpM gerührt wurde, erwärmte sich der Papierstoffansatz mit Hilfe einer Heizplatte auf 40 °C. Wird die Temperatur erreicht, wird die zu testende Menge an Adsorbens mit Hilfe einer Pasteurpipette zu dem Papierstoffansatz zugegeben. Anschließend ist die Adsorptionszeit im Stoffansatz auf 30 min bei 40 °C festgelegt und die Mischung wird solange mit 400 UpM gerührt. Danach wird der Papierstoffansatz mit dem Adsorbens auf 1% Feststoffgehalt mit Hilfe von entionisiertem Wasser (40 °C) verdünnt.

Für die Siebwasserherstellung werden 1000g dieses verdünnten Stoffansatzes (1 Gew-% Feststoffanteil) im Entwässerungs- und Retentionsgerät (Mütek DF3 03 der Firma Mütek, DE) 420 Sekunden entwässert (Sieb 170 $\mu$m, Rührgeschwindigkeit 700 UpM). Die Siebwasserproben werden analytisch untersucht.

b) Flowcytometrische Analyse des Siebwassers:

Hier wurde die sogenannte Durchflusszytometrie verwendet, wie in Vähäsalo et al., "Use of Flow Cytometrie In Wet End Research", Paper Technology, 44 (1) , S. 45, February 2003 und ergänzend in "Effects of pH and calcium Chloride on pitch in peroxidebleached mechanical pulp suspensions", 7th European Workshop on Lignocellulosics and Pulp, August 26-29, 2002, Äbo/Finnland, beschrieben. Dabei wird, kurz gesagt, eine Lichtstreumethode zum Zählen der Teilchen mit einer Fluoreszenzmarkierung verbunden.

c) Gaschromatographische Analyse des Siebwassers:

Hier wurde die Methode von F. Orsa and B. Holmbom "A Convenient Method for the Determination of Wood Exctractives in Papermaking Process Waters and Effluents", Journal of Pulp and Paper Science, Vol 20 No. 12, December 1994, pp J361, verwendet.

6. Bestimmung des Quellvolumens

Das Quellvolumen wird dabei wie folgt bestimmt: Ein kalibrierter 100 ml-Messzylinder wird mit 100 ml dest. Wasser gefüllt. 2,0 g der zu messenden Substanz werden in Portionen von 0, 1 bis 0,2 g langsam auf der Wasseroberfläche gegeben. Nach dem Absinken des Materials wird das nächste Quantum aufgegeben. Nach Beendigung der Zugabe wartet man 1 Stunde und liest dann das Volumen der aufgequollenen Substanz in ml/2g ab.

Materialien:

Bentonit

Es wurde ein alkalisch mit Natriumcarbonat aktivierter Bentonit verwendet. Die Einzelheiten sind in der Tabelle 1 dargestellt.

Tabelle 1: Eigenschaften des verwendeten Bentonits

|  | Einheit | Werte |
|---|---|---|
| **$H_2O$** | % | 12 |
| **Quellvolumen:** |  |  |
| sofort | ml/2g Bentonit | 43 |
| 1h | ml/2g Bentonit | 45 |
| **Viskosität:** |  |  |
| **Feststoff** | % | 5, 0 |
| Brookfield DV II **nach 1 h** |  |  |
| 100 Upm | mPas | 404 |
| 20 Upm | mPas | 1700 |
|  |  |  |
| **pH**-Wert |  | 9, 85 |
| Kationenaustausch |  |  |
| - CEC | meq/100 g | 100 |
| - Na $^+$ | meq/100 g | 115 |
| - K $^+$ | meq/100 g | 1,8 |
| - Ca $^{2+}$ | meq/100 g | 67 |
| - Mg $^{2+}$ | meq/100 g | 20 |
| - Fe $^{3+}$ | meq/100 g | <0,5 |
| - Al $^{3+}$ | meq/100 g | 0, 7 |

Alkylphosphonsäure

Es wurde eine Alkylphosphonsäure der Fa. Clariant mit dem Handelsname HOSTAPHAT® OPS 100 verwendet. Chemisch handelt es sich dabei um Octylphosphonsäure.
Salze für die alkalische Aktivierung
Natriumcarbonat (Soda), in technischer Qualität von der Fa. Solvay.

Talk als Referenzmaterial

Es wurde ein Talk von der Fa. Mondo Minerals B. V. Branch Finland mit dem Handelsname, FINNTALC P15 verwendet.

Bentonitaktivierung

An einem Extruder (W&P-Kneter) wird der Rohton mit einem 25 - 38 Gew.-%-igen Wassergehalt vorgelegt und für 3 Minuten homogenisiert (vorkneten). Anschließend wird die entsprechende Menge an Salz, in diesem Fall 4,5 % Natriumcarbonat bezogen auf die absolut trockene Bentonitmenge, zugegeben. Das derart erhaltene Gemisch wird für 10 Minuten geknetet und anschließend bei 80 °C auf eine Restfeuchtigkeit von 12 Gew.-% getrocknet und anschließend auf einer Mühle (Schlagrotormühle der Fa. Retsch 0,12 mm Sieb) vorvermahlen und an einer der Ultrazentrifugalmühle (Fa. Retsch 0,08 mm Sieb) feinvermahlen. Herstellung einer Bentonit-Aufschlämmung und Oberflächenfunktionalisierung von Bentonit mit Alkylphosphonsäure

In einem 5 L Becher werden 2 L Wasser vorgelegt und unter Rühren (am Pendraulikrührer mit einer Dissolverscheibe bei 930 UPM) in einem Zeitraum von bis 3 Minuten fein vermahlener Bentonit portionsweise zugegeben und für weitere 15 Minuten bei 1865 UPM dispergiert. Bei dieser Herstellungsweise kann der Bentonitanteil in der derart hergestellten Slurry 1-3 Gew.%-ig, bezogen auf das Gesamtgewicht der Slurry, vorliegen. Anschließend wird die entsprechende Menge an Alkylphosphonsäure zugegeben und die Slurry wird für weitere 10 Minuten bei 1865 UPM dispergiert.

Das beste Ergebnis wurde mit 1% HOSTAPHAT OPS 100 (bezogen auf den Bentonitgehalt) erzielt.

Die so hergestellte Slurry wird in den Versuchen zur Störstoffbekämpfung eingesetzt

Ergebnisse:

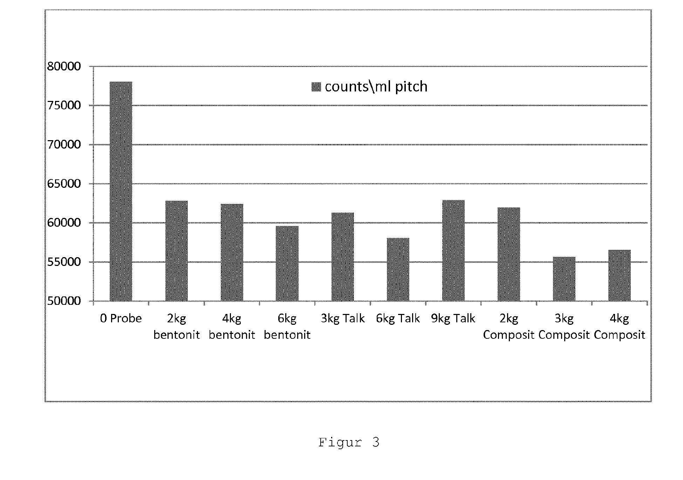

In Figur 3 sind die Ergebnisse aus den flowzytrometrischen Messungen dargestellt. Es wurde die Anzahl der sog. klebrigen Teilchen gemessen.

Die Angaben in Fig. 3 beziehen sich auf kg pro t (Tonne) Zellstoff, wie z. B. 2 kg Bentonit pro t (Tonne) Zellstoff usw.

Mit dem Begriff, "Composit" ist Bentonit + 1% Hostaphat® OPS 100 gemeint.

Auf Grund dessen, dass zur Störstoffbekämpfung bei der Papierherstellung überwiegend Talk angewendet wird, wurde in diesem Fall auch Talk im Vergleich gemessen.

Wie Fig. 3 zeigt, wird im Vergleich zur Null-probe (0 Probe) durch Bentonit alleine und Talkum die Anzahl der klebrigen Teilchen stark reduziert. Das Kompositmaterial aus Bentonit und Octylphosphonsäure ist bei einer Dosage von 3 und 4 kg pro Tonne Zellstoff jedoch deutlich effektiver.

**Patentansprüche**

1. Kompositmaterial, umfassend ein Schichtsilikat, welches mit zumindest einem Tensid mit zumindest einer hydrophilen Gruppe und zumindest einer hydrophoben Gruppe modifiziert ist.

2. Kompositmaterial nach Anspruch 1, wobei das Tensid ein ionisches Tensid ist.

3. Kompositmaterial nach Anspruch 2, wobei das ionische Tensid ein anionisches Tensid ist.

4. Kompositmaterial nach Anspruch 3, wobei das anionische Tensid eine Phosphonatgruppe als hydrophile Gruppe aufweist.

5. Kompositmaterial nach einem der vorhergehenden Ansprüche, wobei das Schichtsilikat ein Bentonit ist.

6. Kompositmaterial nach Anspruch 5, wobei der Bentonit alkalisch aktiviert ist.

7. Kompositmaterial nach Anspruch 5 oder 6, wobei der Bentonit eine Kationenaustauschfähigkeit von mindestens 85 meq/100 g aufweist.

8. Kompositmaterial nach Anspruch 7, wobei der Bentonit einen Anteil an austauschbaren Alkaliionen aufweist, welcher zumindest 50 % der Kationenaustauschfähigkeit des Bentonits entspricht.

9. Kompositmaterial nach einem der vorhergehenden Ansprüche, wobei der Anteil des ionischen Tensids am Kompositmaterial, bezogen auf das Gewicht des Schichtsilikats, mehr als 0,1 Gew.-% beträgt.

**10.** Verfahren zur Herstellung eines Kompositmaterials gemäß einem der Ansprüche 1 bis 9, wobei ein Schichtsilikat bereitgestellt wird und ein Tensid mit dem Schichtsilikat umgesetzt wird.

**11.** Verfahren nach Anspruch 10, wobei das Schichtsilikat in aktivierter Form bereitgestellt wird.

**12.** Verfahren nach Anspruch 10 oder 11, wobei das Schichtsilikat in Form einer Suspension bereitgestellt wird.

**13.** Verfahren zur Störstoffbindung in der Papierherstellung, umfassend die folgenden Schritte:

a) Bereitstellen eines Kompositmaterials gemäß einem der Ansprüche 1 bis 9;
b) Zugabe des Kompositmaterials gemäß a) zu einer zumindest einen Faserstoff enthaltenden Faserstoffsuspension, welche Störstoffe enthält;
c) Bindung der Störstoffe an das Kompositmaterial in der Faserstoffsuspension.

**14.** Verfahren nach Anspruch 13, wobei die Faserstoffsuspension keinen Talk enthält oder kein Talk zur Faserstoffsuspension zugegeben wird.

**15.** Verfahren nach Anspruch 13 oder 14, wobei zwischen 0,5 und 10 kg Kompositmaterial pro Tonne Faserstoff (Trockengewicht), insbesondere zwischen 1 und 7 kg pro Tonne Faserstoff zugegeben wird.

**16.** Verfahren nach einem der Ansprüche 13 bis 15, wobei der Faserstoff Holzschliffanteile enthält.

**17.** Verfahren nach Anspruch 16, wobei der Holzschliffanteil bezogen auf den Faserstoff (Trockengewicht) mindestens 10 Gew.-%, bevorzugt mindestens 30 Gew.-% beträgt.

**18.** Verfahren nach einem der Ansprüche 13 bis 17, wobei die Faserstoffsuspension nach der Zugabe des Kompositmaterials zu einer Papierbahn weiterverarbeitet wird.

Figur 1

2D-Struktur einer
Montmorillonitkante

Wasserstoffbrückenbindung

Komplexierung

Kondensation

Elektrostatische
Adsorption

Figur 2

Figur 3

**Europäisches Patentamt**

**European Patent Office**

**Office européen des brevets**

# EUROPÄISCHER RECHERCHENBERICHT

Nummer der Anmeldung

EP 15 18 0093

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 693 21 917 T2 (RHEOX INT [US]) 27. Mai 1999 (1999-05-27) | 1,2, 5-14,18 | INV. D21C5/02 |
| Y | * Seite 4, Absatz 3 - Seite 17, Absatz 1; Ansprüche; Beispiele * | 3,4, 15-17 | D21C9/08 D21H21/02 |
| | ----- | | D21H17/68 |
| X | EP 0 632 161 A1 (HOECHST AG [DE]) 4. Januar 1995 (1995-01-04) | 1,2,5, 10,12 | D21H19/40 |
| Y | * Seite 2, Absatz 22 - Seite 3, Zeile 5; Ansprüche * | 3,4, 15-17 | |
| | ----- | | |
| X | DE 694 17 089 T2 (RHEOX INTERNATIONAL [US]) 19. August 1999 (1999-08-19) | 1,2 | |
| Y | * Seite 8, letzter Absatz - Seite 23, letzter Absatz; Ansprüche; Beispiele * | 3,4, 15-17 | |
| | ----- | | |
| X,D | US 5 368 692 A (DERRICK ARTHUR P [AU]) 29. November 1994 (1994-11-29) | 1-3,5,6, 10-13 | |
| Y | * Ansprüche; Beispiele * | 3,4, 15-17 | |
| | ----- | | |

| | RECHERCHIERTE SACHGEBIETE (IPC) |
|---|---|
| | D21C D21H |

Der vorliegende Recherchenbericht wurde für alle Patentansprüche erstellt

| Recherchenort | Abschlußdatum der Recherche | Prüfer |
|---|---|---|
| München | 20. Januar 2016 | Koegler-Hoffmann, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 3 128 073 A1

## ANHANG ZUM EUROPÄISCHEN RECHERCHENBERICHT
## ÜBER DIE EUROPÄISCHE PATENTANMELDUNG NR.

EP 15 18 0093

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2016

| Im Recherchenbericht angeführtes Patentdokument | Datum der Veröffentlichung | Mitglied(er) der Patentfamilie | Datum der Veröffentlichung |
|---|---|---|---|
| DE 69321917 T2 | 27-05-1999 | AU 662694 B2 | 07-09-1995 |
| | | AU 4731493 A | 24-03-1994 |
| | | CA 2104280 A1 | 15-03-1994 |
| | | DE 69321917 D1 | 10-12-1998 |
| | | DE 69321917 T2 | 27-05-1999 |
| | | EP 0592789 A2 | 20-04-1994 |
| | | FI 934003 A | 15-03-1994 |
| | | JP 2620036 B2 | 11-06-1997 |
| | | JP H06184970 A | 05-07-1994 |
| | | US 5336372 A | 09-08-1994 |
| EP 0632161 A1 | 04-01-1995 | AU 673603 B2 | 14-11-1996 |
| | | AU 6597294 A | 05-01-1995 |
| | | BR 9402535 A | 03-10-1995 |
| | | CA 2126717 A1 | 27-12-1994 |
| | | DE 4321376 A1 | 05-01-1995 |
| | | EP 0632161 A1 | 04-01-1995 |
| | | FI 943021 A | 27-12-1994 |
| | | JP H07188460 A | 25-07-1995 |
| | | NO 942414 A | 27-12-1994 |
| | | US 5464472 A | 07-11-1995 |
| DE 69417089 T2 | 19-08-1999 | DE 69417089 D1 | 22-04-1999 |
| | | DE 69417089 T2 | 19-08-1999 |
| | | EP 0622490 A2 | 02-11-1994 |
| | | JP H07310295 A | 28-11-1995 |
| | | US 5389200 A | 14-02-1995 |
| US 5368692 A | 29-11-1994 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5368692 A
- US 4964955 A
- EP 0760406 A2
- GB 2297334 A
- WO 2006063682 A2
- WO 0171092 A
- EP 0235893 B2

**In der Beschreibung aufgeführte Nicht-Patentliteratur**

- **P. BIZA ; E. GAKSCH ; P. KAISER.** Verbesserter Austrag von Stickies durch den Einsatz von Talkum. *Wochenblatt für Papierfabrikation,* 2002, vol. 11/12, 759ff
- **VON F. ORSA ; B. HOLMBOM.** A Convenient Method for the Determination of Wood Exctractives in Papermaking Process Waters and Effluents. *Journal of Pulp and Paper Science,* Dezember 1994, vol. 20 (12), J361
- **VON L. VÄHÄSALO et al.** *Flowcytometrische Analyse des Siebwassers*
- **VÄHÄSALO et al.** Use of Flow Cytometrie In Wet End Research. *Paper Technology,* Februar 2003, vol. 44 (1), 45
- Effects of pH and calcium Chloride on pitch in peroxidebleached mechanical pulp suspensions. *7th European Workshop on Lignocellulosics and Pulp,* 26. August 2002